# EUROPEAN PATENT APPLICATION

(11) **EP 4 366 178 A1**
(43) Date of publication of application: **08.05.2024**
(21) Application number: 21948735.2
(22) Date of filing: 05.07.2021
(51) Int. Cl.: H04B 5/00

(54) **WIRELESS COMMUNICATION METHOD AND DEVICES**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN); XU, Weijie, Dongguan, Guangdong 523860 (CN); ZUO, Zhisong, Dongguan, Guangdong 523860 (CN)
(74) Representative: Ipside
(86) International application number: PCT/CN2021/104470
(87) International publication number: WO 2023/279236

(57) **Abstract**

A wireless communication method and devices, capable of achieving backscattering communication of zero-power devices on TDD spectrum. The method includes: a terminal device receives a signal transmitted from a first device, the signal is configured for powering the terminal device and/or for backscattering communication by the terminal device, and the first device being a device other than a network device that provides services to the terminal device.

## Description

### TECHNICAL FIELD

The present disclosure relates to the field of communication technologies, and in particular to a method and a device for wireless communication.

### BACKGROUND

With the development of science and technology, the application of zero-power devices is becoming more and more widespread. A typical zero-power device is a tag in a radio frequency identification (RFID) technology. The tag carries information to a reader-writer by modulating RF signals (i.e., power supply and carrier signals) transmitted by the reader-writer.

Communication in new radio (NR) systems requires strict consideration of uplink and downlink resource allocation. For example, in a time division duplex (TDD) spectrum, the base station transmits signals on the downlink resource, and accordingly, the tag should transmit signals on the uplink resource. In the RFID technology, the backscattering communication of the tag requires the reader-writer to provide carrier signals, i.e., the tag requires the base station to provide carrier signals when transmitting signals on the uplink resource, while in the TDD spectrum, the base station can only transmit the signals on the downlink resource. Therefore, how to realize the backscattering communication of the zero-power device in the TDD spectrum is a problem that needs to be solved urgently.

### SUMMARY OF THE DISCLOSURE

The present disclosure provides a method and a device for wireless communication that enables backscattering communication on the TDD spectrum for zero-power devices.

In a first aspect, provided is a wireless communication method, comprising: receiving, by a terminal device, a signal transmitted by a first device; wherein the signal is configured to energize the terminal device and/or for the terminal device to perform a backscattering communication; the first device is a device other than a network device that provides services to the terminal device.

In a second aspect, provided is a wireless communication method, comprising: transmitting, by a first device, a signal to a terminal device; wherein the signal is configured to energize the terminal device and/or for the terminal device to perform a backscattering communication; the first device is a device other than a network device that provides services to the terminal device.

In a third aspect, provided is a wireless communication method, comprising: transmitting, by a network device, a scheduling signal to a first device; wherein the scheduling signal is configured to schedule or trigger the first device to transmit a signal to a terminal device, the signal being configured to energize the terminal device and/or for the terminal device to perform a backscattering communication.

In a fourth aspect, provided is a terminal device, to perform the method in the first aspect or any implementation thereof. Specifically, the terminal device includes functional modules to perform the method in the first aspect or any implementation thereof.

In a fifth aspect, provided is a wireless communication device, to perform the method in the second aspect or any implementation thereof. Specifically, the terminal device includes functional modules to perform the method in the second aspect or any implementation thereof.

In a sixth aspect, provided is a network device, to perform the method in the third aspect or any implementation thereof. Specifically, the terminal device includes functional modules to perform the method in the third aspect or any implementation thereof.

In a seventh aspect, provided is a terminal device, comprising a processor and a memory; wherein the memory is configured to store a computer program, and the processor is configured to call and run the computer program stored in the memory to perform the method in the first aspect or any implementation thereof.

In an eighth aspect, provided is a wireless communication device, comprising a processor and a memory; wherein the memory is configured to store a computer program, and the processor is configured to call and run the computer program stored in the memory to perform the method in the second aspect or any implementation thereof.

In a ninth aspect, provided is a network device, comprising a processor and a memory; wherein the memory is configured to store a computer program, and the processor is configured to call and run the computer program stored in the memory to perform the method in the third aspect or any implementation thereof.

In a tenth aspect, provided is a chip, to perform the method in any of the first to third aspects or any implementation thereof. Specifically, the chip includes a processor configured to call and run a computer program from a memory, to cause a device arranged with the chip to perform the method in any of the first to third aspects or any implementation thereof.

In an eleventh aspect, provided is a computer-readable storage medium, configured to store a computer program; wherein the computer program is configured to cause a computer to perform the method in any of the first to third aspects or any implementation thereof.

In a twelfth aspect, provided is a computer program product, comprising computer program instructions; wherein the computer program instructions are configured to cause a computer to perform the method in any of the first to third aspects or any implementation thereof.

In a thirteenth aspect, provided is a computer program, configured to cause a computer to perform the method in any of the first to third aspects or any implementation thereof.

By means of the above technical solution, the terminal device receives a signal transmitted by the first device for supplying power to the terminal device and/or for the terminal device to perform the backscattering communication. That is, the signal can be used as a power supply signal and/or a carrier signal for the backscattering communication. The first device may be a third-party device. Providing the power supply signal and/or the carrier signal to the backscattering communication by the terminal device through the third-party device instead of providing the power supply signal or the carrier signal through the network device may reduce the load of the network device and reduce the impact on the coverage of the network device, and further, the timing for the terminal device to carry out the backscattering communication may be unrestricted by the network device, which improves the flexibility of the backscattering communication by the terminal device. In addition, the terminal device may effectively solve the problem of backscattering communication on the TDD spectrum by providing the power supply signal and/or carrier signal for the backscattering communication through the third-party device.

### BRIEF DESCRIPTION OF THE DRAWINGS

FIG. 1 is a schematic view of a communication system architecture according to some embodiments of the present disclosure.
FIG. 2 is a schematic view of a zero-power communication system according to some embodiments of the present disclosure.
FIG. 3 is a schematic view of backscattering communication.
FIG. 4 is a schematic view of energy harvesting.
FIG. 5 is a schematic view of a circuit for resistive load modulation.
FIG. 6 is a schematic interaction view of a method for wireless communication according to some embodiments of the present disclosure.
FIG. 7 is a schematic view of backscattering communication according to some embodiments of the present disclosure.
FIGS. 8-12 are schematic interaction views of backscattering communication according to some embodiments of the present disclosure.
FIG. 13 is a schematic view of backscattering communication according to some embodiments of the present disclosure.
FIGS. 14-20 are schematic interaction views of backscattering communication according to some embodiments of the present disclosure.
FIG. 21 is a schematic view of backscattering communication according to some embodiments of the present disclosure.
FIG. 22 is a schematic block view of a terminal device according to some embodiments of the present disclosure.
FIG. 23 is a schematic block view of an device for wireless communication according to some embodiments of the present disclosure.
FIG. 24 is a schematic block view of a network device according to some embodiments of the present disclosure.
FIG. 25 is a schematic block view of a communication device according to some embodiments of the present disclosure.
FIG. 26 is a schematic block view of a chip according to some embodiments of the present disclosure.
FIG. 27 is a schematic block view of a communication system according to some embodiments of the present disclosure.

### DETAILED DESCRIPTION

The technical solutions in the embodiments of the present disclosure will be described below in conjunction with the accompanying drawings in the embodiments of the present disclosure, and it is clear that the described embodiments are a part of the embodiments of the present disclosure and not all of the embodiments. With respect to the embodiments in the present disclosure, all other embodiments obtained by those skilled in the art without making creative labor fall within the scope of the present disclosure.

The technical solutions of the embodiments of the present disclosure can be applied to various communication systems, such as a global system of mobile communication (GSM) system, a code division multiple access (CDMA) system, a wideband code division multiple access (WCDMA) system, a general packet radio service (GPRS), a long-term evolution (LTE) system, an advanced long-term evolution (LTE-A) system, a new radio (NR) system, an NR evolution system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN), a wireless fidelity (Wi-Fi), a 5th-Generation (5G) system, a cellular Internet of things (IoT) system, a cellular passive IoT system, or other communication systems.

Typically, a conventional communication system supports a limited number of connections and is easy to implement. However, as communication technologies evolve, mobile communication systems will support not only traditional communication but also, for example, device to device (D2D) communication, machine to machine (M2M) communication, machine type communication (MTC), vehicle to vehicle (V2V) communication, or vehicle to everything (V2X) communication, etc., and embodiments of the present disclosure may also be applied to these communication systems.

In some embodiments, the communication system in the embodiments of the present disclosure may be applied in a carrier aggregation (CA) scenario, or a dual connectivity (DC) scenario, or a standalone (SA) deployment scenario.

In some embodiments, the communication system in the embodiments of the present disclosure may be applied to an unauthorized spectrum, where the unauthorized spectrum may be considered shared spectrum; or, the communication system in the embodiments of the present disclosure may be applied to an authorized spectrum, where the authorized spectrum may be considered unshared spectrum.

The present disclosure describes various embodiments in conjunction with a network device and a terminal device. The terminal device may be referred to as a user equipment (UE), an access terminal, a subscriber unit, a subscriber station, a mobile station, a mobile platform, a remote station, a remote terminal, a mobile device, a user terminal, a terminal, a wireless communication device, a user agent, or a user device, etc.

In the embodiments of the present disclosure, the network device may be a device for communicating with a mobile device. The network device may be an access point (AP) in WLAN, a base transceiver station (BTS) in GSM or CDMA, a base station (NodeB, NB) in WCDMA, an evolutional base station (evolutional Node B, eNB or eNodeB) in LTE, a repeater station or access point, a network device (gNB) in in-vehicle devices, wearable devices, or NR networks, a network device in cellular IoT, a network device in cellular passive IoT, a network device in a future evolved PLMN network, or a network device in NTN networks, etc.

By way of example and not as a limitation, in the embodiments of the present disclosure, the network device may have a mobile characteristic, e.g., the network device may be a mobile device. In some embodiments, the network device may be a satellite, a balloon station. For example, the satellite may be a low earth orbit (LEO) satellite, a medium earth orbit (MEO) satellite, a geostationary earth orbit (GEO) satellite, a high elliptical orbit (HEO) satellite, etc. In some embodiments, the network device may be a base station set in a location on land, water, etc.

In some embodiments, the network device may provide services for a cell, and the terminal device communicates with the network device through transmission resources (e.g., frequency domain resources, or to way, spectrum resources) used by the cell. The cell may be a cell corresponding to the network device (e.g., a base station), and the cell may belong to a macro base station, or may belong to the base station corresponding to a small cell. The small cell may include: a city cell (Metro cell), a Micro cell, a Pico cell, a Femto cell, etc. These small cells are characterized by a small coverage range and a low transmit power, and are suitable for providing a high-rate data transmission service.

The terminal device may be a station (STATION, ST) in WLAN, which may be a cellular phone, a cordless phone, a session initiation protocol (SIP) phone, a wireless local loop (WLL) station, a personal digital assistant (PDA) device, a handheld device or computing device with wireless communication capabilities, or other processing devices connected to wireless modems, an in-vehicle device, a wearable device, a terminal device in next-generation communication systems such as NR network, a terminal device in future-evolved public land mobile networks (PLMN), or a terminal device in cellular IoT, a terminal device in cellular passive IoT, etc.

In the embodiments of the present disclosure, the terminal device may be deployed on land, including indoors or outdoors, handheld, wearable, or vehicle-mounted; on water (e.g., on ships, etc.); and in the air (e.g., on airplanes, balloons, and satellites, etc.).

In the embodiments of the present disclosure, the terminal device may be a mobile phone, a tablet computer (Pad), a computer with a wireless transceiver function, a virtual reality (VR) terminal device, an augmented reality (AR) terminal device, a wireless terminal device in industrial control, a wireless terminal device in unmanned driving, a wireless terminal device in remote medical care, a wireless terminal device in smart grid, a wireless terminal device in transportation safety, a wireless terminal device in a smart city, or a wireless terminal device in a smart home.

As an example and not as a limitation, in the embodiments of the present disclosure, the terminal device may be a wearable device. The wearable device may be referred to as a wearable smart device, which is a general term for applying wearable technology to intelligently design and develop wearable devices for daily wear, such as glasses, gloves, watches, clothing, and shoes. The wearable device is a portable device that can be worn directly on the body or integrated into the user's clothing or accessories. The wearable device is a hardware device to realize powerful functions through software support as well as data interaction and cloud interaction. Broadly speaking, the wearable smart devices include full-featured, large-sized devices that do not rely on a smartphone to achieve complete or partial functionality, such as a smartwatch or smart glasses, etc., as well as devices that focus on a certain type of application functionality and need to be used in conjunction with other devices such as a smartphone, e.g., various types of smart bracelets and smart jewelry that perform physical signs monitoring.

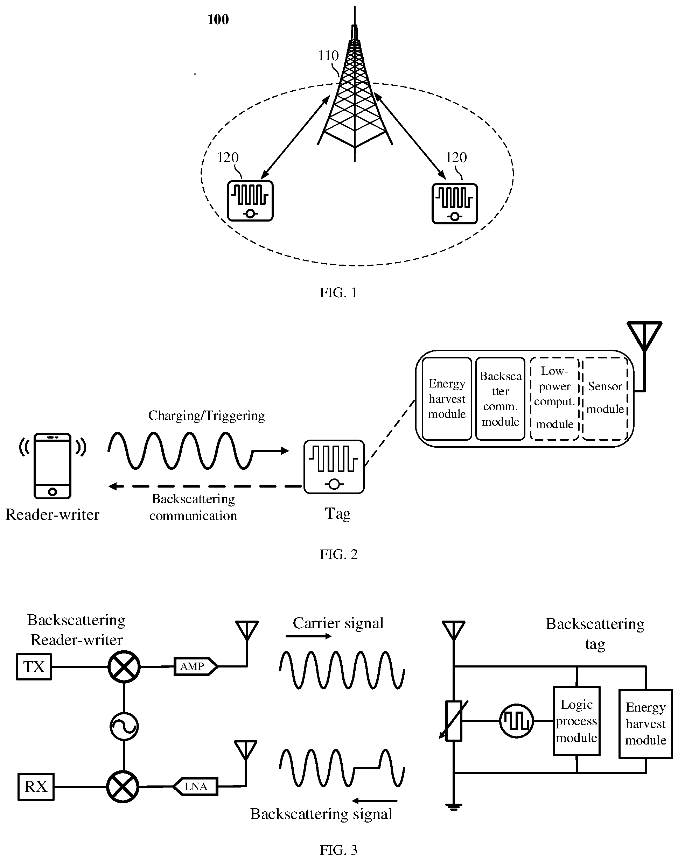

Exemplarily, the communication system 100 applied by the embodiments of the present disclosure is shown in FIG. 1. The communication system 100 may include a network device 110, and the network device 110 may be a device that communicates with a terminal device 120 (or referred to as a communication terminal, terminal). The network device 110 may provide communications coverage for a specific geographic region and may communicate with the terminal device located within the coverage region.

FIG. 1 exemplarily illustrates one network device and two terminal devices. In some embodiments, the communication system 100 may include multiple network devices and may include other numbers of terminal devices within the coverage region of each of the network devices, without limitation in the embodiments of the present disclosure.

In some embodiments, the communication system 100 may further include other network entities such as a network controller, a mobile management entity, etc., without limitation in the embodiments of the present disclosure.

It should be understood that the devices in the network/system in the embodiments of the present disclosure that have communication functions may be referred to as communication devices. Taking the communication system 100 illustrated in FIG. 1 as an example, the communication device may include the network device 110 and the terminal device 120 having communication functions, and the network device 110 and the terminal device 120 may be specific devices as described above, which will not be repeated herein. The communication device may further include other devices in the communication system 100, such as a network controller, a mobile management entity, and other network entities, which are not limited in the embodiments of the present disclosure.

It should be understood that the terms "system" and "network" are often used interchangeably herein. The term "and/or" herein is merely a description of an association relationship of associated objects, indicating that three kinds of relationships may exist, for example, A and/or B, which may be expressed as: the existence of A alone, the existence of both A and B, and the existence of B alone. In addition, the character "/" herein generally indicates that the associated objects are in an "or" relationship.

It should be understood that the "instruct" mentioned in the embodiments of the present disclosure may be a direct instruction, an indirect instruction, or an indication of an associated relationship. For example, A instructing B may mean that A directly instructs B, e.g., B may obtain something through A; may mean that A indirectly instructs B, e.g., A instructs C, and B may obtain something through C; or may mean that there is an associative relationship between A and B.

In the description of the embodiments of the present disclosure, the term "corresponding" may indicate a direct or indirect corresponding relationship between the two, an associated relationship between the two, or a relationship between instructing and being instructed, configuring and being configured, etc.

In the embodiments of the present disclosure, "predefinition" may be realized by storing a corresponding code, form, or other means that can be configured to indicate relevant information in advance in a device (for example, including a terminal device and a network device), and the present disclosure does not limit the specific realization thereof. For example, predefinition may mean being defined in a protocol.

In the embodiments of the present disclosure, the "protocol" may refer to a standard protocol in the field of communication, for example, LTE protocol, NR protocol, and relevant protocols applied in future communication systems, and the present disclosure does not limit in this regard.

In order to facilitate the understanding of the technical solutions in the embodiments of the present disclosure, the relevant technology of the present disclosure is described.

### I. Zero-power device

A typical zero-power device is an RFID tag. The RFID technology is to achieve contactless automatic transmission and identification of tag information, through wireless radio frequency signal spatial coupling. The RFID tag is also known as "radio frequency tag" or "electronic tag". According to different ways of power supply to divide the type of electronic tags, for example, the RFID tag may include active electronic tag, passive electronic tag, and semi-passive electronic tag. The active electronic tag refers to that the electronic tag's work energy is provided by a battery, and the battery, memory, and antenna together constitute the active electronic tag. Different from an activation method of passive radio frequency, the active electronic tag consistently transmits information through a set frequency band before the battery replacement. The passive electronic tag does not support a built-in battery. When the passive electronic tag is close to a reader-writer, the tag is in a near-field range formed by antenna radiation of the reader-writer. The antenna of the electronic tag generates induction current through electromagnetic induction, and the induction current drives the chip circuit of the electronic tag. The chip circuit transmits identification information stored in the tag to the reader-writer through the antenna of the electronic tag. The semi-passive electronic tag inherits advantages of the passive electronic tag, namely, small volume, light weight, low price, and long service life. A built-in battery only provides power supply to very few circuits inside the chip when there is no reader-writer visiting, and provides power supply to the RFID chip only when there is reader-writer visiting, in order to increase the read-write distance of the tag, thereby improving the reliability of the communication.

As shown in FIG. 2, a most basic RFID system includes an electronic tag (TAG) and a reader-writer (Reader/Writer). The electronic tag includes coupling components and a chip, for example, the electronic tag may include an energy harvesting module, a backscattering communication module, a low-power computing module, and a sensor module. Each electronic tag has a unique electronic code that is placed on a measured target for marking the target object. The reader-writer is not only able to read information on the electronic tag, but also able to write information on the electronic tag, and further provide energy needed for communication of the electronic tag. As shown in FIG. 2, after the electronic tag enters an electromagnetic field, the electronic tag receives a radio frequency signal transmitted from the reader-writer. The passive or semi-passive electronic tag can obtain energy through the electromagnetic field produced in the space and transmit the stored information in the electronic tag, and the reader-writer reads the information transmitted by the electronic tag and decodes the information, thereby identifying the electronic tag.

### II. Zero-power communication

In the embodiments of the present disclosure, communication based on zero-power devices is referred to as zero-power communication (or battery-free communication). A description of key technologies in zero-power communication is provided below.

### 1. Backscattering communication

As shown in FIG. 3, the zero-power device (the backscattering tag in FIG. 3) receives a carrier signal transmitted by a backscattering reader, harvests energy through the energy collection module, and modulates the incoming signal through the low-power computing module (the logic processing module in FIG. 3) and performs backscattering.

The main features of backscattering communication are as follows:
(1) The terminal does not actively transmit signals and realizes backscattering communication by modulating the incoming signals.
(2) The terminal does not rely on a traditional active amplifier transmitter and uses the low-power computing module, which greatly reduces the hardware complexity.
(3) Combined with the energy harvesting module, battery-free communication can be realized.

### 2. Energy harvesting (RF Power Harvesting)

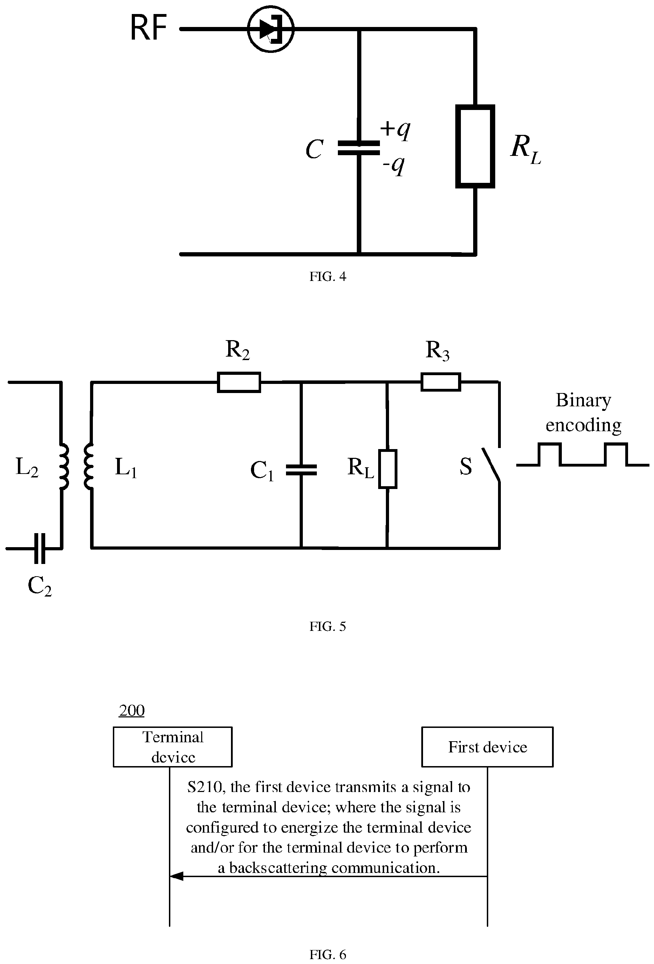

FIG. 4 is a principle view of energy harvesting. The energy harvesting module is applied to realize the harvesting of spatial electromagnetic wave energy through electromagnetic induction, and then realize the drive of a load circuit (the low-power computing module, sensors, etc.), so as to realize the battery-free communication.

### 3. Load modulation

The load modulation is a method often applied by the electronic tag to transmit data to the reader-writer. The load modulation completes the modulation process by adjusting electrical parameters of an oscillation loop of the electronic tag according to a beat of the data flow, such that the magnitude and phase of impedance of the electronic tag change accordingly. The load modulation technology mainly includes resistive load modulation and capacitive load modulation.

FIG. 5 is a principle view of resistive load modulation. In the resistive load modulation, the load is connected in parallel with a resistor, known as a load modulation resistor. The resistor is turned on and off according to the clock of the data stream, and the on/off of a switch S is controlled by binary data coding.

In the capacitive load modulation, the load is connected in parallel with a capacitor that replaces the load modulation resistor controlled by binary data encoding in FIG. 5.

### 4. Encoding

The data transmitted by the electronic tag can be represented by different forms of codes to represent the binary "1" and "0". The RFID system is typically adopted with one of the following encoding methods: reverse non-return to zero (NRZ) coding, Manchester coding, unipolar return to zero (Unipolar RZ) coding, differential biphasic (DBP) coding, differential coding, pulse interval coding (PIE), bidirectional spatial coding (FMO), Miller coding, interest differential coding, etc. In layman's terms, different pulse signals are used to represent 0 and 1.

### III. Cellular passive IoT

With the increase of 5G industry applications, there are more and more types of connected objects and application scenarios, and there will be higher requirements for the cost and power consumption of communication terminals. The application of battery-free and low-cost passive IoT devices becomes the key technology of cellular IoT, enriching the type and number of linked terminals of the 5G network and truly realizing the interconnection of all things.

### IV. Uplink and downlink system configuration in NR system

In order to design a more flexible resource allocation, the NR system integrates time division duplex (TDD) and frequency division duplex (FDD) operating modes to realize a resource allocation structure with a time slot as a cycle.

As an example, the time slot structure of NR is defined as follows.

The FDD operating mode and the TDD operating mode are unified, and instead of setting independent operating modes, the effect of the FDD operating mode is achieved by configuring all orthogonal frequency division multiplexing (OFDM) symbols in the TDD operating mode as uplink or downlink.

The number of standardized uplink/downlink resource ratio configurations is increased from 7 in LTE to 254. Such a design greatly improves the support of the NR system for diverse services.

In addition to defining downlink and uplink OFDM symbols in a time slot, Flexible (F) symbols are also defined to be used as more dynamic downlink/uplink configurations.

The NR system still supports flexible configuration of the time slot format based on actual requirements.

In the RFID technology, the backscattering communication of the tag is a modulation of the carrier signal (which also serves as a power supply) transmitted by the reader-writer to carry information to the reader-writer. That is, the backscattering communication of the tag to the reader-writer requires the reader-writer to provide the carrier signal, which in itself does not take into account the uplink and downlink frame structure. In the NR system, the TDD and FDD operating modes are integrated in order to allocate resources more flexibly, and the communication in the NR system requires strict consideration of uplink and downlink resource allocation. In the TDD operating mode, the base station transmits signals on the downlink resource, and the corresponding tag should transmit signals on the uplink resource. In the RFID technology, the backscattering communication of the tag requires the reader-writer to provide the carrier signal, i.e., the base station is also required to provide the carrier signal when the tag transmits signals on the uplink resource, whereas in the TDD system, the base station can only transmit signals on the downlink resource. Therefore, how to realize the backscattering communication of the zero-power device in the TDD spectrum is a problem that needs to be solved urgently.

The technical solutions of the present disclosure are described in detail below by means of specific embodiments. The above related technologies may be arbitrarily combined with the technical solutions of the embodiments of the present disclosure as optional solutions, all of which fall within the scope of the embodiments of the present disclosure. The embodiments of the present disclosure include at least some of the following.

FIG. 6 is a schematic interaction diagram of a method 200 for wireless communication according to some embodiments of the present disclosure. The method 200 includes the following operations as illustrated in FIG. 6.

S210: receiving, by a terminal device, a signal transmitted by a first device; where the signal is configured to energize the terminal device and/or for the terminal device to perform a backscattering communication.

It should be understood that the embodiments of the present disclosure may be applied to a cellular IoT system, such as a cellular passive IoT system, or to other scenarios in which the terminal device transmits information to the network device by means of zero-power communication or battery-free communication. The present disclosure does not limit in this regard.

It is noted that the zero-power communication method may include a backscattering communication method, or may include other methods introduced in the standard evolution for communication by passive or semi-passive devices. In the following description, the communication of the terminal device with the network device through the backscattering communication method is illustrated as an example, but the present disclosure is not limited thereto.

In some embodiments, the terminal device is a zero-power device, or another device that does not actively transmit signals but instead carries information through a signal transmitted by the network device or another device.

In some embodiments, the terminal device may be powered in a passive or semi-passive manner.

In some embodiments, the fact that the signal is configured to energize the terminal device may include that the signal is configured to energize a circuit drive of the terminal device, or, may include that the signal is configured to energize the terminal device for a processing operation such as modulation, coding, etc. of a carrier signal.

In some embodiments, the fact that the signal is configured for the terminal device to perform a backscattering communication may include that the terminal device may carry information through the signal, or, that the signal may serve as an incident signal source for the backscattering communication, that is, the signal may serve as a carrier signal for the backscattering communication. For example, the terminal device may modulate the signal to obtain a backscattering signal.

For ease of distinction and illustration, it may be considered that the signal may serve as a power supply signal when the signal is configured to energize the terminal device, and that the signal may serve as a carrier signal when the signal is configured for the terminal device to perform a backscattering communication.

It should be understood that, in some embodiments, the power supply signal and the carrier signal may be different signals. In other embodiments, the power supply signal may also serve as the carrier signal for backscattering communication, i.e., the power supply signal and the carrier signal may be the same signal. For example, the terminal device may modulate the power supply signal to obtain a backscattering signal.

Therefore, in the embodiments of the present disclosure, the signals that can be transmitted by the first device to the terminal device may serve as the power supply signal and/or the carrier signal. That is, the first device may serve as a power supply signal carrier and/or a carrier signal carrier for the terminal device to perform the backscattering communication.

In some embodiments, the first device may be a device other than the network device corresponding to the terminal device, i.e., the first device may be a third-party device. Providing the power supply signal and/or the carrier signal to the backscattering communication by the terminal device through the third-party device instead of providing the power supply signal or the carrier signal through the network device may reduce the load of the network device and reduce the impact on the coverage of the network device, and further, the timing for the terminal device to carry out the backscattering communication may be unrestricted by the network device, which improves the flexibility of the backscattering communication by the terminal device. In addition, the terminal device may effectively solve the problem of backscattering communication on the TDD spectrum by providing the power supply signal and/or carrier signal for the backscattering communication through the third-party device.

In some embodiments, the network device corresponding to the terminal device may refer to a network device providing services for the terminal device, or, the network device corresponding to the terminal device is a receiving-end device for the backscattering signal transmitted by the terminal device.

It should be understood that the embodiments of the present disclosure may be applied to the TDD system or may be applied to the FDD system. That is, whether in the TDD system or the FDD system, the terminal device may provide the power supply signal and/or the carrier signal by a third-party device, to enable the backscattering communication by the terminal device.

In some embodiments, in the FDD system, the network device may provide the power supply signal and/or the carrier signal to the terminal device.

In some embodiments, in the FDD system, when the power supply signal and the carrier signal are different signals, the frequency of the power supply signal and the frequency of the carrier signal may be the same or different.

In some embodiments, in the TDD system, when the power supply signal and the carrier signal are different signals, the frequency of the power supply signal and the frequency of the carrier signal may be the same or different.

It should be understood that the present disclosure does not limit the frequency of the power supply signal, for example, the power supply signal may be a low-frequency signal, a medium-frequency signal, or a high-frequency signal.

It should be understood that the present disclosure does not limit the waveform of the power supply signal, for example, the power supply signal may have a sine wave, a square wave, a triangular wave, a pulse, or a rectangular wave, etc.

In some embodiments, the power supply signal may be a continuous wave, or may be a discontinuous wave, i.e., an interruption of a certain duration is allowed.

It should be understood that the present disclosure does not limit the frequency of the carrier signal, for example, the carrier signal may be a low frequency signal, a medium frequency signal, or a high frequency signal.

It should be understood that the present disclosure does not limit the waveform of the carrier waveform signal, for example, the carrier waveform signal may have a sine wave, a square wave, a triangular wave, a pulse, or a rectangular wave, etc.

In some embodiments, the carrier signal may be a continuous wave, or may be a discontinuous wave, i.e., an interruption of a certain duration is allowed.

In some embodiments, the power supply signal or the carrier signal may each be any of the signals or channels in the 3GPP standard, e.g., sounding reference signal (SRS), physical random access channel (PRACH), physical uplink control channel (PUCCH), physical uplink shared channel (PUSCH), physical downlink control channel (PDCCH), physical downlink shared channel (PDSCH), physical broadcast channel (PBCH), etc., or, may be a newly introduced signal or channel in the standard evolution, to which the present disclosure is not limited.

It should be understood that the present disclosure does not specifically limit the energy storage capacity of the terminal device. Depending on the energy storage capacity of the terminal device, different auxiliary signals are to be provided for the terminal device to perform the backscattering communication. For example, when the terminal device does not have an energy storage capability, the terminal device is required to be provided with a power supply signal and a carrier signal for the backscattering communication. The power supply signal and the carrier signal may be provided by the same device or may be provided by different devices. Another example is that the terminal device has a certain energy storage capacity, for example, the terminal device is a semi-passive device that can energize its own circuit drive, in which case it may be necessary to provide only the carrier signal to the terminal device for the backscattering communication.

The specific realization of the power supply and backscattering communication by the terminal device is described in connection with specific embodiments.

It should be understood that the manner of energizing the terminal device described in the embodiments of the present disclosure does not necessarily mean that the terminal device is necessarily required to be energized. For example, the terminal device may not be required to be energized by other devices when the terminal device possesses a certain amount of energy storage capacity. The above statement is intended to clarify that in the event that the terminal device is required to be energized or has a need to be energized, the terminal device may be energized based on the following manner.

In some embodiments of the present disclosure, in a case where the first device transmits the power supply signal to the terminal device, the power supply signal may include an uplink power supply signal and/or a downlink power supply signal. That is, the first device may serve as an uplink power supply device and/or a downlink power supply device for the terminal device.

In some embodiments, the uplink power supply signal may refer to a signal for supplying power to the terminal device on an uplink resource, and the downlink power supply signal may refer to a signal for supplying power to the terminal device on a downlink resource. Alternatively, the uplink power supply signal may refer to a signal for supplying power to the terminal device for uplink data transmission by the terminal device on an uplink resource, and the downlink power supply signal may refer to a signal for supplying power to the terminal device for downlink data transmission by the terminal device on a downlink resource.

In some embodiments of the present disclosure, the S210 may include:
receiving, by the terminal device, a first signal transmitted by the first device on an uplink resource, where the first signal may be configured to energize the terminal device.

That is, the first device may provide the power supply signal to the terminal device on the uplink resource. In other words, the first signal may serve as an uplink power supply signal.

In some embodiments, the first signal is further configured for backscattering communication by the terminal device.

For example, the first signal may further serve as a carrier signal for the backscattering communication.

In this case, the method 200 further includes:
modulating, by the terminal device, the first signal to obtain a backscattering signal;
further transmitting the backscattering signal to the network device.

That is, the first signal may serve as an uplink supply signal and a carrier signal.

In other embodiments, the first signal is not configured for backscattering communication by the terminal device.

In this case, another signal is required to provide a carrier signal for the backscattering communication by the terminal device.

For example, a first carrier signal of a third device is configured for the terminal device to perform the backscattering communication.

In this case, the method 200 further includes:
modulating, by the terminal device, the first carrier signal transmitted by the third device to obtain a backscattering signal;
further transmitting the backscattering signal to the network device.

In some embodiments, the third device and the first device may be the same device or may be different devices.

That is, two signals may be provided by the same device for energizing the terminal device and for backscattering communication, respectively. Alternatively, several signals may be provided through different devices for energizing the terminal device and for performing backscattering communication, respectively.

In other embodiments of the present disclosure, the S210 may include:
receiving, the terminal device, a second signal transmitted by the first device on a downlink resource; where the second signal is configured to energize the terminal device.

That is, the first device may provide the power supply signal to the terminal device on a downlink resource. In other words, the second signal may serve as a downlink power supply signal.

In some embodiments of the present disclosure, the terminal device performs energy harvesting based on the second signal, and further may perform downlink signal reception based on the harvested capacity, for example, to receive a scheduling signal from the network device.

It should be understood that in the embodiments of the present disclosure, the first device may transmit the first signal only on the uplink resource, or may transmit the second signal only on the downlink resource, or may transmit both the first signal on the uplink resource and the second signal on the downlink resource. That is, in the embodiments of the present disclosure, the power supply on the uplink resource and the power supply on the downlink resource may be provided to the terminal device by the same device, and it is also possible that the power supply on the uplink resource and the power supply on the downlink resource may be provided to the terminal device by different devices respectively.

In summary, in the embodiments of the present disclosure, the power supply of the terminal device may be realized in the following manner:
Mode 1: the first device is a third-party device providing power supply on the uplink resource for the terminal device, and another third-party device (noted as a second device) provides power supply on the downlink resource for the terminal device.
Mode 2: the first device is a third-party device providing power supply on the uplink resource and power supply on the downlink resource for the terminal device.
Mode 3: the first device is a third-party device providing power supply on the uplink resource for the terminal device, and a network device providing power supply on the downlink resource for the terminal device.
Mode 4: in an FDD system, the network device provides power supply on the downlink resource for the terminal device, in which case the downlink resource and uplink resource are frequency division multiplexed.

It should be understood that the uplink resource and the downlink resource are time-division multiplexed when the Mode 1 to Mode 3 are applied in a TDD system, and that the uplink resource and the downlink resource are frequency-division multiplexed when the Mode 1 to Mode 3 are applied in an FDD system. Hereinafter, the power supply methods as above and corresponding backscattering communication methods are described in combination with Embodiments 1-4.

### Embodiment 1: corresponding to power supply Mode 1

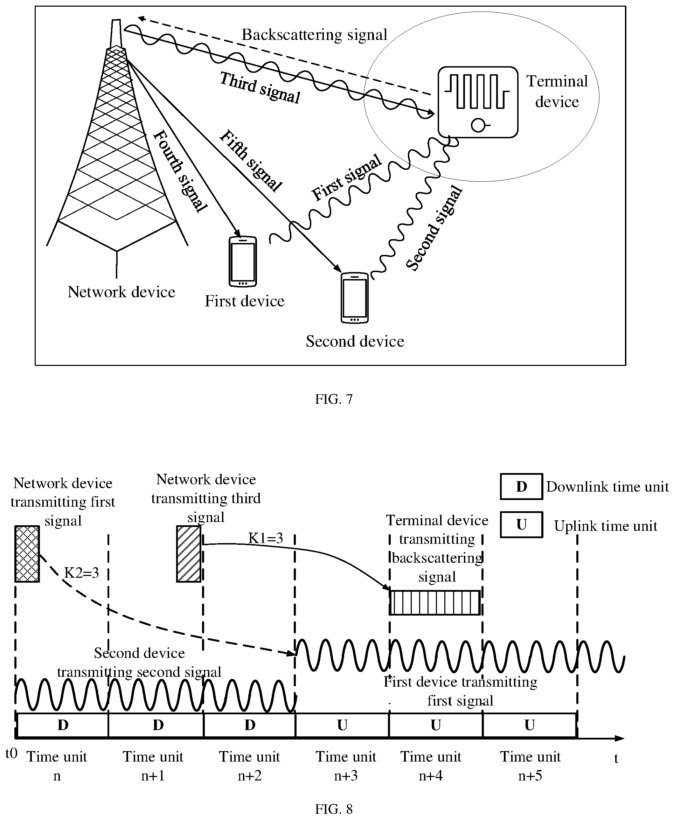

In the Embodiment 1, as shown in FIGS. 7 to 12, the first device may transmit a first signal on an uplink resource, and a second device may transmit a second signal on a downlink resource.

In some embodiments, the first device may be a smart device (e.g., a smartphone), a smart gateway, a dedicated power supply node (e.g., a charging station), a micro base station, etc.

In some embodiments, the second device may be a base station, a smart device (e.g., a smartphone), a smart gateway, a dedicated power supply node (e.g., a charging station), a micro-base station, etc.

It should be understood that in the embodiments of the present disclosure, the first device transmitting the first signal on the uplink resource may mean that the first device transmits the first signal on some or all of the uplink resource way. For example, the first signal is transmitted continuously on the uplink resource, or, the first signal is transmitted discontinuously on the uplink resource.

The present disclosure does not limit the frequency of the first signal, for example, the first signal may be a low frequency signal, a medium frequency signal, or a high frequency signal.

The present disclosure does not limit the waveform of the first signal, for example, the first signal may be composed of a sine wave, a square wave, a triangular wave, a pulse, or a rectangular wave.

In some embodiments, the first signal may be a continuous wave or may be a discontinuous wave.

It should be understood that in the embodiments of the present disclosure, the second device transmitting the second signal on the downlink resource may mean that the second device transmits the second signal on some or all of the downlink resource ways. For example, the second signal is transmitted continuously on the downlink resource or, the second signal is transmitted discontinuously on the downlink resource.

The present disclosure does not limit the frequency of the second signal, for example, the second signal may be a low frequency signal, a medium frequency signal, or a high frequency signal.

The present disclosure does not limit the waveform of the second signal, for example, the second signal may be composed of a sine wave, a square wave, a triangular wave, a pulse, or a rectangular wave.

In some embodiments, the second signal may be a continuous wave or may be a discontinuous wave.

In some embodiments, the frequency of the first signal and the frequency of the second signal are the same or different.

In some embodiments, the first device transmits the first signal at a first transmit power and the second device transmits the second signal at a second transmit power.

In some embodiments, the first transmit power and the second transmit power are the same or different.

In some embodiments, the first transmit power may be predefined, indicated by the network device, or self-selected by the first device.

In some embodiments, the second transmit power may be predefined, indicated by the network device, or self-selected by the second device.

In some embodiments of the present disclosure, the network device may control the initiation and/or interruption of the power supply signal. For example, when the network device is required to schedule the terminal device for communication, a device is required to be triggered in advance to initiate transmitting the power supply signal. For another example, the network device may control the device to stop transmitting the power supply signal when there is no need for communication from scheduling the terminal device for a period of time.

In some embodiments, the first device may start or stop transmitting the first signal based on a control signal of the network device, e.g., to start transmitting the first signal in case of receiving a first control signal from the network device, and to stop transmitting the first signal in case of receiving a second control signal from the network device.

In some embodiments, the first device starting transmitting the first signal may not be based on the control signal of the network device, for example, the first device may start transmitting the first signal at a predefined time unit.

In some embodiments, the first device stopping transmitting the first signal may not be based on the control signal of the network device, for example, the first device may stop transmitting the first signal after a certain length of time after starting transmitting the first signal. In some embodiments, the length of time may be predefined or directed by the network device.

In some embodiments, the second device may start or stop transmitting the second signal based on the control signal of the network device, e.g., to start transmitting the second signal in case of receiving a third control signal from the network device, and to stop transmitting the second signal in case of receiving a fourth control signal from the network device.

In some embodiments, the second device starting transmitting the second signal may not be based on the control signal of the network device, for example, the second device may start transmitting the second signal at a predefined time unit.

In some embodiments, the second device stopping transmitting the second signal may not be based on the control signal of the network device, for example, the first device may stop transmitting the second signal after a certain length of time after starting transmitting the second signal. In some embodiments, the length of time may be predefined or directed by the network device.

In some embodiments, the transmitting of the first signal by the first device on the uplink resource may be based on scheduling by the network device. For example, as shown in FIG. 7, the first device may transmit the first signal based on a fourth signal transmitted by the network device, where the fourth signal is configured to schedule or trigger the first device to transmit the first signal.

In other embodiments, the transmitting of the first signal by the first device on the uplink resource is scheduling-free. For example, the first device periodically transmits the first signal on the uplink resource, or the first device transmits the first signal on the uplink resource in a predefined manner.

In some embodiments, as shown in FIG. 8, the fourth signal is configured to schedule the first device to transmit the first signal from a first time unit for uplink data transmission. That is, the transmitting of the first signal starts at the time of switching between uplink and downlink resources.

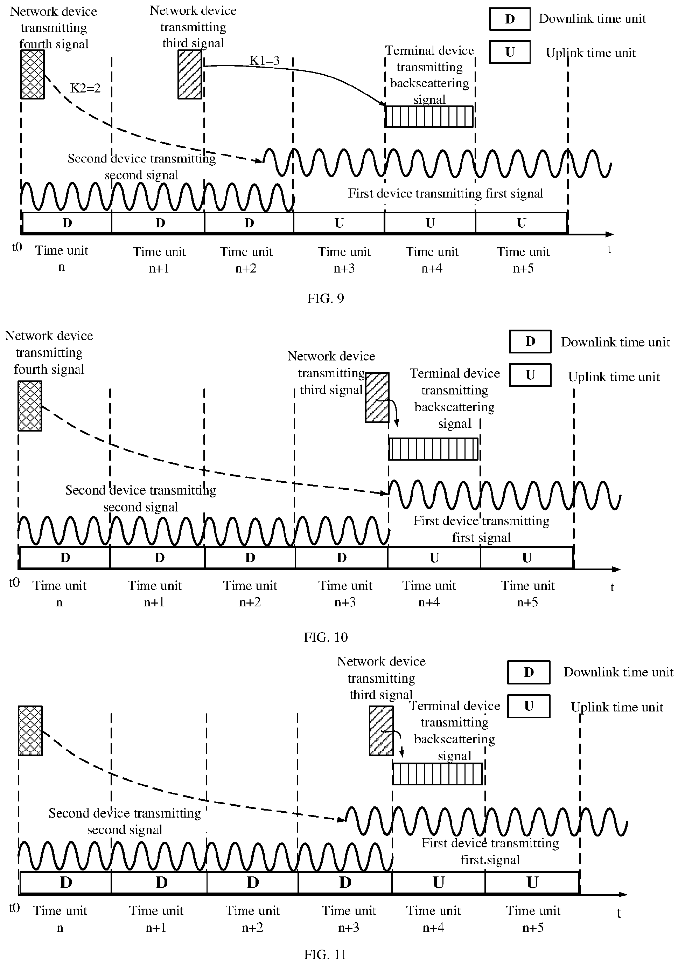

In other embodiments, as shown in FIG. 9, the fourth signal is configured to schedule the first device to start transmitting the first signal before the first time unit for uplink data transmission. The transmitting of the first signal starts in advance, before switching between uplink and downlink resources.

In yet further embodiments, the fourth signal is configured to schedule the first device to start transmitting the first signal after the first time unit for uplink data transmission. The transmitting of the first signal starts after switching between uplink and downlink resources.

For example, the fourth signal may include a second time unit offset K2 for indicating a time unit offset of the time unit at which the first device starts transmitting the first signal relative to the time unit at which the fourth signal is located.

The first device may determine the location of the time unit at which to start transmitting the first signal based on the second time unit offset and the location of the time unit at which the fourth signal is received.

For example, as shown in FIG. 8, the first device receives the fourth signal at time unit n and the second time unit offset K2 is 3, then the first device may determine to start transmitting the first signal on time unit n+3.

As another example, as shown in FIG. 9, the first device receives the fourth signal at time unit n and the second time unit offset K2 is 2, then the first device may determine to start transmitting the first signal on time unit n+2.

In some embodiments, when the fourth signal does not include the second time unit offset K2, the first device may determine the location of the time unit at which to start transmitting the first signal in accordance with a predetermined rule, e.g., determining a first uplink time unit after the time unit at which the fourth signal is received as the location of the time unit at which to start transmitting the first signal.

In some embodiments, the transmitting of the second signal by the second device on the downlink resource may be based on scheduling by the network device. For example, as shown in FIG. 7, the second device may transmit the second signal based on a fifth signal transmitted by the network device, where the fifth signal is configured to schedule or trigger the second device to transmit the second signal.

In other embodiments, the transmitting of the second signal by the second device on the downlink resource is scheduling-free. For example, the second device periodically transmits the second signal on the uplink resource, or the second device transmits the second signal on the uplink resource in a predefined manner.

In some embodiments, the fifth signal is configured to schedule the second device to start transmitting the second signal on a next time unit, or on a particular downlink time unit.

For example, the fifth signal may include a third time unit offset for indicating a time unit offset of the time unit at which the second device starts transmitting the second signal relative to the time unit at which the fifth signal is located.

The second device may determine the location of the time unit at which to start transmitting the second signal based on the third time unit offset and the location of the time unit at which the fifth signal is received. For example, the second device receives the fifth signal at time unit n and the third time unit offset K2 is 2, then the first device may determine to start transmitting the first signal on time unit n+2.

In some embodiments, when the fifth signal does not include the third time unit offset K3, the first device may determine the location of the time unit at which to start transmitting the second signal in accordance with a predetermined rule, e.g., determining a next downlink time unit of the time unit at which the fifth signal is received as the location of the time unit at which to start transmitting the second signal.

In some embodiments, the fourth signal may further include a sixth indicative information for indicating a transmit power of the first signal. That is, the network device may configure the transmit power of the first signal at the same time as scheduling the first device to transmit the first signal.

In some embodiments, the fifth signal may further include a seventh indicative information for indicating a transmit power of the second signal. That is, the network device may configure the transmit power of the second signal at the same time as scheduling the second device to transmit the second signal.

It should be understood that the embodiments of the present disclosure do not specifically limit the specific location of the time domain at which the first device transmits the first signal and the manner in which the location of the time domain is determined.

In some embodiments of the present disclosure, the first device transmits the first signal within a first time window. That is, the first device may transmit the first signal over a continuous period of time.

In some embodiments, the first time window is determined based on predefined information and/or indicative information of the network device.

In some embodiments, the starting location and length of the first time window is predefined. As an example, the first time window is a periodic time window, and a start time unit and length of the first time window within a period may be predefined. The first device may determine the specific location of the first time window based on the period, start time unit, and length of the time window, and further may transmit the first signal within the first time window.

It should be understood that the time unit in the embodiments of the present disclosure may be any unit of time measurement, such as a symbol, a time slot, a subframe, a frame, etc.

In other embodiments, the location of the first time window may be indicated by the network device.

For example, the network device, when scheduling the first device to transmit the first signal, may simultaneously indicate scheduling information for the first signal, i.e., the fourth signal may include the scheduling information for the first signal, and the first device may determine the location of the first time window based on the scheduling information for the first signal.

As an example, the scheduling information for the first signal includes a second time unit offset K2 and/or a first duration, the second time unit offset K2 being configured to indicate a time unit offset of the time unit at which the first device starts transmitting the first signal relative to the time unit at which the fourth signal is located, and the first duration being configured to indicate a duration for which the first device transmits the first signal.

In yet further embodiments, the first time window may be one of multiple predefined time windows.

In some embodiments, the network device, when scheduling the first device to transmit the first signal, may simultaneously indicate one of the multiple predefined time windows. For example, the fourth signal may include a second indicative information, the second indicative information being configured to indicate one of the multiple predefined time windows. Further, the first device may transmit the first signal based on the time window indicated by the network device.

In further embodiments of the present disclosure, the first device transmits the first signal on a first time unit set.

In some embodiments, the first time unit set is determined based on predefined information and/or indicative information of the network device.

In some embodiments, the first time unit set is predefined. As an example, the first time unit set is a periodic set of time units, and the time units in the first time unit set may be continuous or discontinuous, which is not limited by the present disclosure.

In some embodiments, the first time unit set is one of multiple predefined time unit sets.

In some embodiments, the network device, when scheduling the first device to transmit the first signal, may simultaneously indicate one of the multiple predefined time unit sets. For example, the fourth signal may include a third indicative information, for indicating one of the multiple predefined time unit sets. Further, the first device may transmit the first signal based on the time unit set indicated by the network device.

It should be understood that the embodiments of the present disclosure do not specifically limit the specific location of the time domain at which the second device transmits the second signal and the manner in which the location of the time domain is determined.

In some embodiments of the present disclosure, the second device transmits the second signal within a second time window. That is, the second device may transmit the second signal over a continuous period of time.

In some embodiments, the second time window is determined based on predefined information and/or indicative information of the network device.

In some embodiments, the starting location and length of the second time window is predefined. As an example, the second time window is a periodic time window, and a start time unit and length of the second time window within a period may be predefined. The second device may determine the specific location of the second time window based on the period, start time unit, and length of the time window, and further may transmit the second signal within the second time window.

In other embodiments, the location of the second time window may be indicated by the network device.

For example, the network device, when scheduling the second device to transmit the second signal, may simultaneously indicate scheduling information for the second signal, i.e., the fifth signal may include scheduling information for the second signal, and the second device may determine the location of the second time window based on the scheduling information for the second signal.

As an example, the scheduling information for the second signal includes a third time unit offset K3 and/or a second duration, the third time unit offset K3 being configured to indicate a time unit offset of the time unit at which the second device starts transmitting the second signal relative to the time unit at which the fifth signal is located, and the second duration being configured to indicate a duration for which the second device transmits the second signal.

The second device may determine the location of the time unit at which to start transmitting the second signal based on the third time unit offset and the location of the time unit at which the fifth signal is received.

In yet further embodiments, the second time window may be one of multiple predefined time windows.

In some embodiments, the network device, when scheduling the second device to transmit the second signal, may simultaneously indicate one of the multiple predefined time windows. For example, the fifth signal may include a fourth indicative information, the fourth indicative information being configured to indicate one of the multiple predefined time windows. Further, the second device may transmit the second signal based on the time window indicated by the network device.

In further embodiments of the present disclosure, the second device transmits the second signal on a second time unit set.

In some embodiments, the second time unit set is determined based on predefined information and/or indicative information of the network device.

In some embodiments, the second time unit set is predefined. As an example, the second time unit set is a periodic set of time units, and the time units in the second time unit set may be continuous or discontinuous, which is not limited by the present disclosure.

In some embodiments, the second time unit set is one of multiple predefined time unit sets.

In some embodiments, the network device, when scheduling the second device to transmit the second signal, may simultaneously indicate one of the multiple predefined time unit sets. For example, the fifth signal may include a fifth indicative information, for indicating one of the multiple predefined time unit sets. Further, the second device may transmit the second signal based on the time unit set indicated by the network device.

In some embodiments of the present disclosure, the terminal device performing the backscattering communication may also be scheduling-free, e.g., performing the backscattering communication based on a capacity obtained by the uplink power supply signal as well as the carrier signal when the terminal device has an uplink transmission requirement.

In other embodiments of the present disclosure, the terminal device performs the backscattering communication based on scheduling or triggering by the network device. For example, as shown in FIGS. 7 to 12, the terminal device may perform the backscattering communication upon receiving a third signal from the network device, where the third information is configured to schedule or trigger the terminal device to perform the backscattering communication.

In some embodiments, the third signal includes a first indicative information, the first indicative information being configured to indicate a first time unit offset Kl, where the first time unit offset Kl is configured to indicate a time unit offset of the time unit at which the terminal device transmits the backscattering signal relative to the time unit at which the third signal is located.

For example, as shown in FIGS. 8 and 9, when the terminal device receives the third signal at time unit n+1 and the first time unit offset Kl is 3, the terminal device may determine that the backscattering communication is performed at time unit n+4.

It should be understood that in the embodiments of the present disclosure, in a case where the third signal indicates the first time unit offset, the network device is required to control that the time unit at which the backscattering communication is performed, as determined according to the first time unit offset, is the uplink resource.

In some embodiments, in a case where the third signal does not carry time-related indicative information (e.g., the first time unit offset) for the backscattering communication, the terminal device may determine the time unit at which the backscattering communication is performed in accordance with a predetermined rule.

As an example, the terminal device may determine that the backscattering communication is performed on a next time unit of the time unit at which the third signal is located. For example, the network device transmits the third signal on time unit i for triggering the terminal device to perform backscattering communication on time unit i+1. In this case, the network device is required to control the scheduling to ensure that time unit i is the downlink resource and time unit i+1 is the uplink resource.

For example, as shown in FIGS. 10 and 11, when the terminal device receives the third signal at time unit n+3, and the third signal does not carry the first time unit offset, the terminal device may determine to perform the backscattering communication on the next time unit, i.e., time unit n+4.

As a further example, the terminal device may determine to perform the backscattering communication on a first uplink resource (or, a first uplink time unit) after the time unit at which the third signal is located. For example, when the network device transmits the third signal on time unit i, where time unit i is the downlink resource and time unit i+j is the first uplink resource after time unit i, the terminal device performs the backscattering communication on time unit i+j.

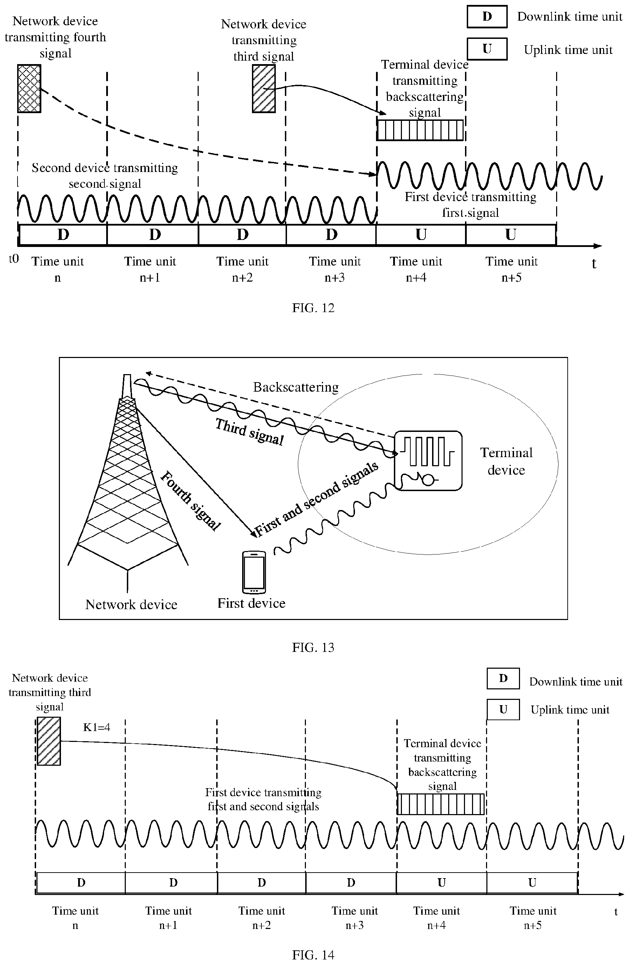

For example, as shown in FIG. 12, when the terminal device receives the third signal at time unit n+2, and the third signal does not carry the first time unit offset, the terminal device may determine to perform the backscattering communication on the first uplink resource after time unit n+2, i.e., time unit n+4.

It should be understood that the present disclosure does not limit the timing of transmitting the third signal and transmitting the fourth signal by the network device, but it is necessary to ensure that the first device is able to provide a corresponding supply signal when the terminal device is performing the backscattering communication.

### Embodiment 2: corresponding to the power supply Mode 2

In the Embodiment 2, as shown in FIGS. 13 to 20, the first device may transmit a first signal on an uplink resource, and a second signal on a downlink resource. That is, the uplink power supply signal and the downlink power supply signal of the terminal device may be provided by a single device.

It will be understood that in a case where the first device and the second device in Embodiment 1 are the same device, Embodiment 1 is Embodiment 2.

Therefore, the relevant implementation of the first device transmitting the first signal in Embodiment 2 may refer to the relevant implementation of the first device transmitting the first signal in Embodiment 1, and the relevant implementation of the first device transmitting the second signal in Embodiment 2 may refer to the relevant implementation of the second device transmitting the second signal in Embodiment 1, which will not be repeated herein for brevity.

In some embodiments, as shown in FIG. 14, the first device may transmit a continuous power supply signal on both downlink resource and uplink resource, in which case the first and second signals may be considered to be from the same signal.

In some embodiments, the first device transmits the first signal and the second signal using the same transmit power, as shown in FIGS. 14, 15, and 16.

In some embodiments, the first device transmits the first signal and transmits the second signal using independent transmit powers.

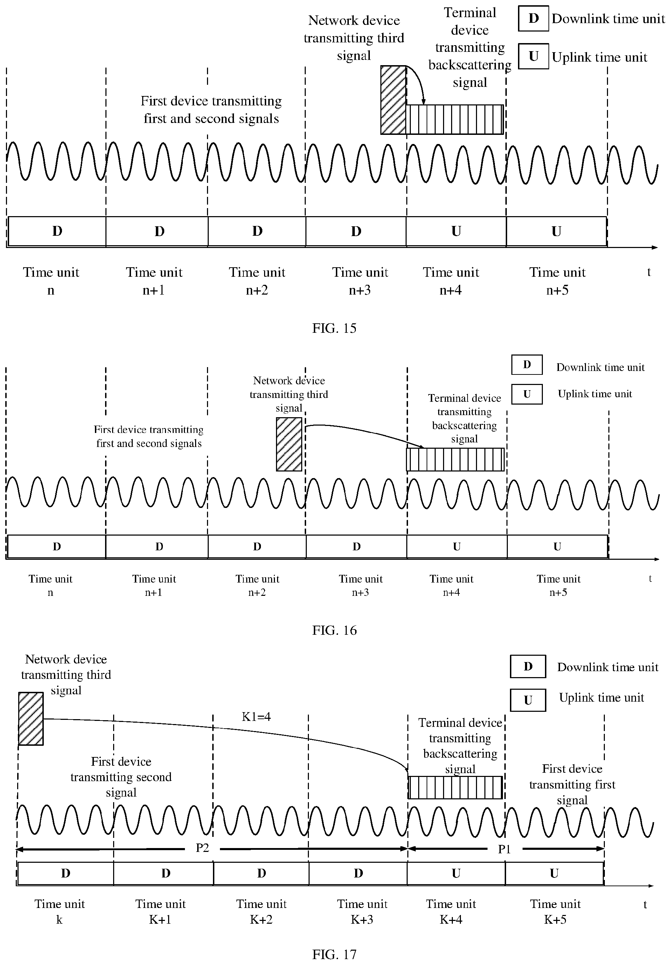

For example, as shown in FIGS. 17 to 20, the first device transmits the first signal with a first transmit power P1 and the second signal with a second transmit power P2.

In some embodiments, the first transmit power and the second transmit power are the same or different.

In some embodiments, the transmit powers of the first signal and the second signal may be predefined, or indicated by the network device, or self-selected by the first device.

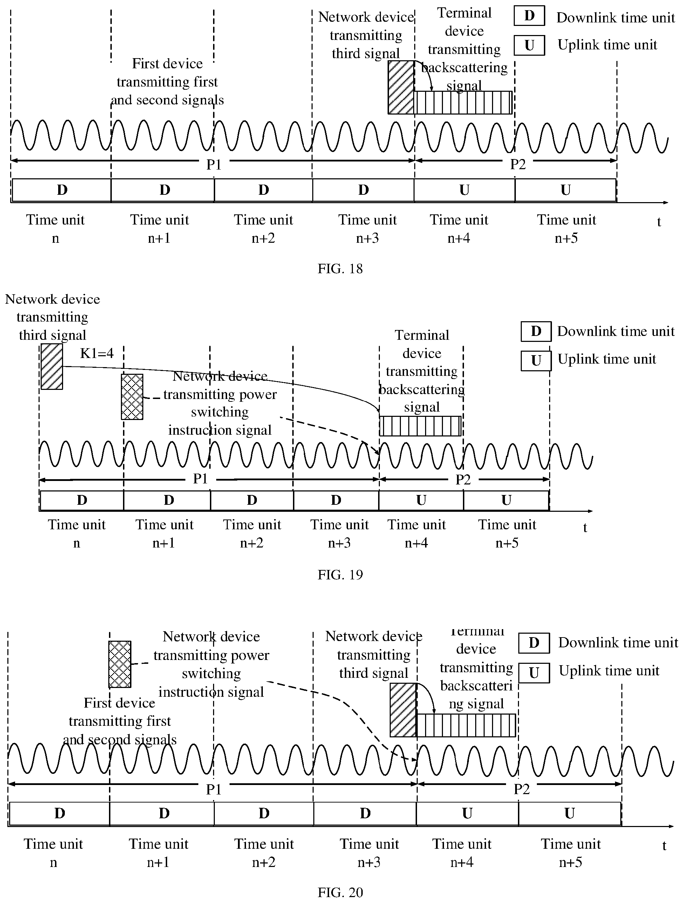

In some embodiments, as shown in FIGS. 17 and 18, the first device switches the transmit powers of the power supply signals on the uplink resource and downlink resource by itself. For example, on the downlink resource, the second signal is transmitted with a second transmit power P2, and on the uplink resource, the first signal is transmitted with a first transmit power P1.

In other embodiments, the first device switches the transmit power of the power supply signal based on an indication of the network device.

For example, as shown in FIGS. 19 and 20, the first device may receive a power switching instruction signal from the network device and switch the transmit power based on the power switching instruction signal.

In some embodiments, the power switching instruction signal may be configured to indicate the timing of power switching by the first device and/or power related information after switching.

For example, the power switching instruction signal is configured to indicate a time unit offset K indicating a time unit offset of the time unit at which the first device performs the power switching relative to the time unit at which the power switching instruction signal is received.

As a further example, the power switching instruction signal may be configured to indicate a transmit power of the power supply signal after the switching or to indicate a power adjustment amount indicating an adjustment amount of the transmit power of the power supply signal after the switching relative to the transmit power of the power supply signal before the switching.

It should be understood that the switching timing of the first device for performing the power switching may be predefined or may be based on an indication of the power switching instruction signal.

For example, in a case where the power switching instruction signal does not indicate the switching timing, the power switching may be considered to be immediate, i.e., the first device performs the power switching immediately upon reception of the power switching instruction signal.

As another example, in a case where the power switching instruction signal does not indicate the switching timing, it may be considered that the power switching is effective on a next time unit, i.e., the first device performs the power switching on the next time unit upon reception of the power switching instruction signal.

Further, for example, in a case where the power switching instruction signal does not indicate the switching timing, it may be considered that the power switching is effective at a first uplink time unit thereafter, i.e., the first device performs the power switching on the first uplink time unit upon reception of the power switching instruction signal.

It should be understood that the transmit power after the switching of the first device may be predefined or may be based on the indication of the power switching instruction signal. For example, when the transmit power of the uplink power supply signal is predefined, the first device may transmit the uplink power supply signal based on the predefined transmit power; or when the power switching instruction signal transmitted by the network device indicates the transmit power after the switching, the first device may determine the transmit power to be used for transmitting the uplink power supply signal based on the indication from the network device.

In some embodiments of the present disclosure, the network device may control the initiation and/or interruption of the power supply signal. For example, when the network device is required to schedule the terminal device for communication, the first device is required to be triggered in advance to initiate transmitting the power supply signal. For another example, the network device may control the first device to stop transmitting the power supply signal when there is no need for communication from scheduling the terminal device for a period of time.

In some embodiments, the uplink power supply signal and the downlink power supply signal may be controlled by the same control signal. For example, the network device may control the first device to start the power supply through the single control signal, whereby the first device starts transmitting the first signal on the uplink resource and the second signal on the downlink resource. For another example, the network device may control the first device to stop the power supply through the control signal, whereby the first device stops transmitting the first signal on the uplink resource and stops transmitting the second signal on the downlink resource.

In other embodiments, the uplink power supply signal and the downlink power supply signal may be controlled by independent control signals. In this way, the first device may be independently controlled to perform uplink power supply and downlink power supply according to the control signals.

In some embodiments, the transmitting of the first signal by the first device on the uplink resource may be based on scheduling of the network device, or may be scheduling-free. For example, the first device periodically transmits the first signal on the uplink resource, or the first device transmits the first signal on the uplink resource in a predefined manner. The specific implementation refers to the scheduling of the first signal in Embodiment 1, which will not be repeated here for brevity.

In some embodiments, the transmitting of the second signal by the first device on the downlink resource may be based on scheduling of the network device, or may be scheduling-free. For example, the first device periodically transmits the second signal on the uplink resource, or the first device transmits the second signal on the uplink resource in a predefined manner. The specific implementation refers to the scheduling of the second signal in Embodiment 1, which will not be repeated here for brevity.

In the Embodiment 2, the first signal and the second signal may be scheduled based on the same signal. For example, the first device, upon receiving a scheduling signal of the power supply signal transmitted by the network device, transmits the first signal on the uplink resource and the second signal on the downlink resource based on the scheduling signal. As a specific example, the first device may transmit a continuous power supply signal on the uplink resource and the downlink resource based on the scheduling signal.

In some embodiments of the Embodiment 2, the terminal device performing the backscattering communication may also be scheduling-free, e.g., performing the backscattering communication based on a capacity obtained by the uplink power supply signal as well as the carrier signal when the terminal device has an uplink transmission requirement.

In other embodiments of the Embodiment 2, the terminal device performs the backscattering communication based on scheduling or triggering by the network device. For example, as shown in FIGS. 14 to 20, the terminal device may perform the backscattering communication upon receiving a third signal from the network device, where the third information is configured to schedule or trigger the terminal device to perform the backscattering communication.

In some embodiments, the third signal includes a first indicative information, the first indicative information being configured to indicate a first time unit offset K1, where the first time unit offset K1 is configured to indicate a time unit offset of the time unit at which the terminal device transmits the backscattering signal relative to the time unit at which the third signal is located.

For example, when the terminal device receives the third signal at time unit n and the first time unit offset K1 is 4, as shown in FIGS. 14, 17, and 19, the terminal device may determine that the backscattering communication is performed on time unit n+4.

It should be understood that in the embodiments of the present disclosure, in a case where the third signal indicates the first time unit offset, the network device is required to control that the time unit at which the backscattering communication is performed, as determined according to the first time unit offset, is the uplink resource.

In some embodiments, in a case where the third signal does not carry time-related indicative information (e.g., the first time unit offset) for the backscattering communication, the terminal device may determine the time unit at which the backscattering communication is performed in accordance with a predetermined rule.

As an example, the terminal device may determine that the backscattering communication is performed on a next time unit of the time unit at which the third signal is located. For example, the network device transmits the third signal on time unit i for triggering the terminal device to perform backscattering communication on time unit i+1. In this case, the network device is required to control the scheduling to ensure that time unit i is the downlink resource and time unit i+1 is the uplink resource.

For example, as shown in FIGS. 15, 18 and 20, when the terminal device receives the third signal at time unit n+3, and the third signal does not carry the first time unit offset, the terminal device may determine to backscatter the communication on the next time unit, i.e., time unit n+4.

As another example, the terminal device may determine to perform the backscattering communication on a first uplink resource (or, a first uplink time unit) after the time unit at which the third signal is located. For example, when the network device transmits the third signal on time unit i, where time unit i is the downlink resource and time unit i+j is the first uplink resource after time unit i, the terminal device performs the backscattering communication on time unit i+j.

For example, as shown in FIG. 16, when the terminal device receives the third signal at time unit n+2, and the third signal does not carry the first time unit offset, the terminal device may determine to perform the backscattering communication on the first uplink resource after time unit n+2, i.e., time unit n+4.

### Embodiment 3: corresponding to the power supply Mode 3

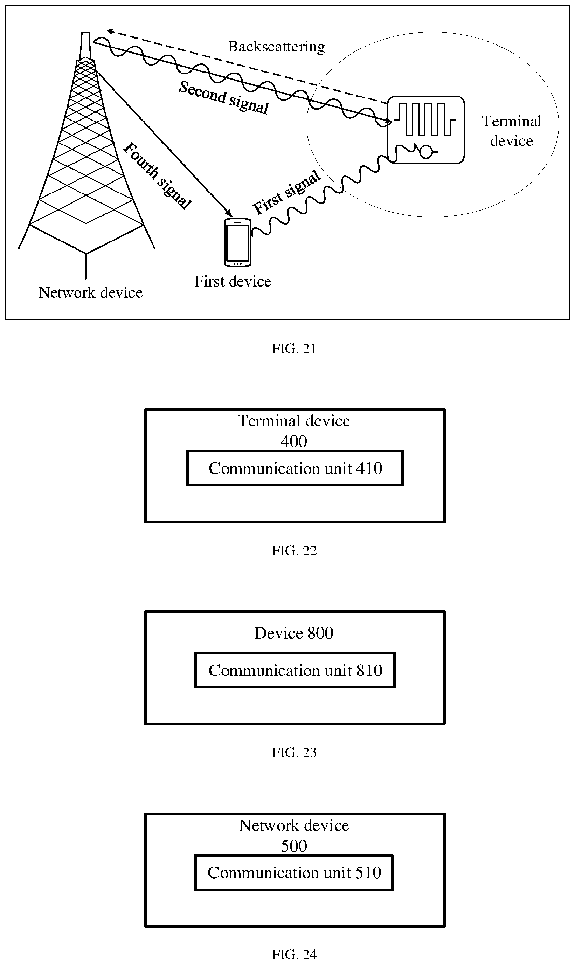

In the Embodiment 3, as shown in FIG. 21, the first device may transmit a first signal on an uplink resource and the network device may transmit a second signal on a downlink resource. That is, the power supply signal required for the uplink transmission of the terminal device may be provided through the third-party device, and the downlink power supply signal may be provided through the network device.

It should be understood that in the Embodiment 3, the relevant implementation of the first device transmitting the first signal may refer to the specific implementation of the first device transmitting the first signal in Embodiment 1, which will not be repeated herein for brevity.

In some embodiments, in the Embodiment 3, the transmit power used by the first device to transmit the first signal and the transmit power used by the network device to transmit the second signal may be the same or may be different.

In some embodiments, in the Embodiment 3, the frequency point of the first signal transmitted by the first device and the frequency point of the second signal transmitted by the network device may be the same or may be different.

It should be understood that in the Embodiment 3, the terminal device performs the backscattering communication in a way that can be referred to the relevant descriptions in Embodiment 1 and Embodiment 2, which will not be repeated herein for brevity.

### Embodiment 4: corresponding to the power supply Mode 4

The embodiment 4 may be applicable to an FDD system, in which case the network device may transmit a second signal on a downlink resource, and accordingly the terminal device receives the second signal on the downlink resource and performs energy harvesting based on the second signal.

When the second signal further serves as a carrier signal for backscattering communication by the terminal device, the terminal device may further process the second signal by modulating the second signal, frequency shifting, etc., to obtain a backscattering signal of a corresponding frequency, and transmit the backscattering signal to the network device on an uplink resource.

It should be understood that in the Embodiment 4, the manner in which the terminal device performs the backscattering communication can be referred to the relevant descriptions in Embodiment 1 and Embodiment 2, which will not be repeated herein for brevity.

In summary, in the embodiments of the present disclosure, a third-party device may be utilized to provide a power supply signal and/or a carrier signal to the terminal device. In one specific implementation, an uplink power supply signal and a downlink power supply signal may be provided to the terminal device through the same third-party device. In another specific implementation, an uplink power supply signal and a downlink power supply signal may be provided to the terminal device through different third-party devices. In yet another specific implementation, a downlink power supply signal may be provided to the terminal device through a network device, and a downlink power supply signal may be provided to the terminal device through a third-party device. In yet another specific implementation, an uplink power supply signal and a downlink power supply signal may be provided to the terminal device through a network device in an FDD system. Further, the uplink power supply signal may serve as a carrier signal for the backscattering communication by the terminal device, or, the terminal device may utilize a separate carrier signal for the backscattering communication, thereby solving the problems of power supply and carrier in the backscattering communication by the terminal device in the TDD spectrum.

The method embodiments of the present disclosure are described in detail above in connection with FIG. 6 to FIG. 21, and device embodiments of the present disclosure are described in detail below in connection with FIG. 22 to FIG. 27. It should be understood that the device embodiments and the method embodiments correspond to each other, and that similar descriptions can be made with reference to the method embodiments.

FIG. 22 is a schematic block view of a terminal device 400 according to some embodiments of the present disclosure. As shown in FIG. 22, the terminal device 400 includes:
a communication unit 410, configured to receive a signal transmitted by a first device; where the signal is configured to energize the terminal device and/or for the terminal device to perform a backscattering communication; the first device is a device other than a network device that provides services to the terminal device.

In some embodiments, the communication unit 410 is further configured to:
receive a first signal transmitted by the first device on an uplink resource; where the first signal is configured to energize the terminal device and/or for the terminal device to perform the backscattering communication.

In some embodiments, the first signal is configured for the terminal device to perform the backscattering communication, and the terminal device 400 further includes:
a processing unit, configured to modulate the first signal to obtain a backscattering signal;
the communication unit 410 is further configured to: transmit the backscattering signal to the network device.

In some embodiments, the first signal is not configured for the terminal device to perform the backscattering communication, and the terminal device 400 further includes:
a processing unit, configured to modulate a first carrier signal transmitted by a second device to obtain a backscattering signal;
the communication unit 410 is further configured to: transmit the backscattering signal to the network device.

In some embodiments, the communication unit 410 is further configured to:
receive a second signal transmitted by the first device on a downlink resource; where the second signal is configured to energize the terminal device.

In some embodiments, the communication unit 410 is further configured to:
receive a third signal transmitted by the network device; where the third signal is configured to schedule or trigger the terminal device for the backscattering communication.

In some embodiments, the third signal includes a first indicative information, the first indicative information being configured to indicate a first time unit offset; where the first time unit offset is configured to indicate a time unit offset of a time unit at which the terminal device transmits the backscattering signal relative to a time unit at which the third signal is located.

In some embodiments, the communication unit 410 is further configured to:
perform the backscattering communication on a next time unit of the time unit at which the third signal is located, in response to the third signal not indicating time information at which the terminal device transmits the backscattering signal; or
perform the backscattering communication on a first uplink resource after the time unit at which the third signal is located, in response to the third signal not indicating time information at which the terminal device transmits the backscattering signal.

In some embodiments, the terminal device is a zero-power device, the first device is a dedicated power supply node, and the first device is a non-zero-power device.

In some embodiments, the communication unit may be a communication interface or transceiver, or an input/output interface of a communication chip or a system on chip. The processing unit described above may be one or more processors.

It should be understood that the terminal device 400 according to the embodiments of the present disclosure may correspond to the terminal device in the method embodiments of the present disclosure, and that the above and other operations and/or functions of the various units in the terminal device 400 are not repeated herein for the sake of brevity in order to realize the corresponding processes of the terminal device in the method 200 illustrated in FIGS. 6 to 21, respectively.

FIG. 23 is a schematic block view of an device 800 for wireless communication according to some embodiments of the present disclosure. As shown in FIG. 23, the device 800 includes:
a communication unit 810, configured to transmit a signal to a terminal device; where the signal is configured to energize the terminal device and/or for the terminal device to perform a backscattering communication; the device is a device other than a network device that provides services to the terminal device.

In some embodiments, the communication unit 810 is further configured to:
transmit a first signal to the terminal device on an uplink resource; where the first signal is configured to energize the terminal device and/or for the terminal device to perform the backscattering communication.

In some embodiments, the communication unit 810 is further configured to:
receive a fourth signal transmitted by the network device; where the fourth signal is configured to schedule or trigger the device to transmit the first signal, the first signal being transmitted by the device based on the fourth signal.

In some embodiments, the fourth signal is configured to schedule the device to transmit the first signal from a first time unit for uplink data transmission; or
the fourth signal is configured to schedule the device to start transmitting the first signal before the first time unit for uplink data transmission; or
the fourth signal is configured to schedule the device to start transmitting the first signal after the first time unit for uplink data transmission.

In some embodiments, the communication unit 810 is further configured to: transmit the first signal within a first time window.

In some embodiments, the first time window is determined based on predefined information and/or indicative information of the network device.

In some embodiments, the first time window is determined based on a scheduling information for the first signal in the fourth signal transmitted by the network device, where the fourth signal is configured to schedule or trigger the device to transmit the first signal.

In some embodiments, the scheduling information for the first signal includes a second time unit offset and/or a first duration, the second time unit offset is configured to indicate a time unit offset of a time unit at which the device starts transmitting the first signal relative to a time unit at which the fourth signal is located, and the first duration is configured to indicate a duration for which the device transmits the first signal.

In some embodiments, the scheduling information for the first signal includes a second indicative information, and the second indicative information is configured to indicate one of multiple predefined time windows.

In some embodiments, the communication unit 810 is further configured to: transmit the first signal on a first time unit set.

In some embodiments, the first time unit set is determined based on predefined information and/or indicative information of the network device.

In some embodiments, the indicative information of the network device includes a third indicative information, and the third indicative information is configured to indicate one of multiple predefined time unit sets.

In some embodiments, the first signal is transmitted by the device at a first transmit power, where the first transmit power is predefined, configured by the network device, or determined by the device.

In some embodiments, the communication unit 810 is further configured to:
start or stop transmitting the first signal to the terminal device based on a control signal from the network device.

In some embodiments, the communication unit 810 is further configured to:
transmit a second signal to the terminal device on a downlink resource, where the second signal is configured to energize the terminal device.

In some embodiments, the communication unit 810 is further configured to:
receive a fifth signal transmitted by the network device; where the fifth signal is configured to schedule or trigger the device to transmit the second signal, the second signal being transmitted by the device based on the fifth signal.

In some embodiments, the communication unit 810 is further configured to: transmit the second signal within a second time window.

In some embodiments, the second time window is determined based on predefined information and/or indicative information of the network device.

In some embodiments, the second time window is determined based on scheduling information for the second signal in a fifth signal, where the fifth signal is configured to schedule or trigger the device to transmit the second signal.

In some embodiments, the scheduling information for the second signal includes a third time unit offset and/or a second duration; the third time unit offset is configured to indicate a time unit offset of a time unit at which the device starts transmitting the second signal relative to a time unit at which the fifth signal is located, and the second duration is configured to indicate a duration for which the device transmits the second signal.

In some embodiments, the scheduling information for the second signal includes a fourth indicative information, and the fourth indicative information is configured to indicate one of multiple predefined time windows.

In some embodiments, the communication unit 810 is further configured to:
transmit the second signal on a second time unit set.

In some embodiments, the second time unit set is determined based on predefined information and/or indicative information of the network device.

In some embodiments, the indicative information of the network device includes a fifth indicative information, where the fifth indicative information is configured to indicate one of multiple predefined time unit sets.

In some embodiments, the second signal is transmitted by the device at a second transmit power, where the second transmit power is predefined, configured by the network device, or determined by the device.

In some embodiments, the communication unit 810 is further configured to:
receive a power switching instruction signal transmitted by the network device;
the device 800 further includes:
   a processing unit, configured to switch a transmit power of a signal from the second transmit power to the first transmit power, based on the power switching instruction signal; where the first transmit power is a transmit power used by the device for transmitting the first signal on the uplink resource, the first signal is configured for energize the terminal device and/or for the terminal device to perform the backscattering communication.

In some embodiments, the processing unit is specifically configured to:
immediately switch to the first transmit power upon receiving the power switching instruction signal; or
switch to the first transmit power on a next time unit upon receiving the power switching instruction signal;
switch to the first transmit power on a first uplink time unit after a time unit at which the power switching instruction signal is received upon receiving the power switching instruction signal.

In some embodiments, the communication unit 810 may be a communication interface or transceiver, or an input/output interface of a communication chip or a system-on-chip. The processing unit described above may be one or more processors.

It should be understood that the device 800 according to the embodiments of the present disclosure may correspond to the first device in the method embodiments of the present disclosure, and that the above and other operations and/or functions of the various units in the device 800 are not described herein for the sake of brevity in order to realize the corresponding processes of the first device in the method embodiment illustrated in FIGS. 6 to 21, respectively.

FIG. 24 is a schematic block view of a network device according to some embodiments of the present disclosure. The network device 500 of FIG. 24 includes:
a communication unit 510, configured to transmit a scheduling signal to a first device; where the scheduling signal is configured to schedule or trigger the first device to transmit a signal to a terminal device, the signal being configured to energize the terminal device and/or for the terminal device to perform a backscattering communication.

In some embodiments, the scheduling signal includes a fourth signal, and the communication unit 510 is further configured to:
transmit the fourth signal to the first device; where the fourth signal is configured to schedule or trigger the first device to transmit a first signal, the first signal being configured to energize the terminal device and/or for the terminal device to perform the backscattering communication.

In some embodiments, the fourth signal is configured to schedule the first device to transmit the first signal from a first time unit for uplink data transmission; or
the fourth signal is configured to schedule the first device to start transmitting the first signal before the first time unit for uplink data transmission; or
the fourth signal is configured to schedule the first device to start transmitting the first signal after the first time unit for uplink data transmission.

In some embodiments, the fourth signal is configured to schedule the first device to transmit the first signal within a first time window.

In some embodiments, the fourth signal includes a scheduling information for the first signal, the first time window being determined based on the scheduling information for the first signal.

In some embodiments, the scheduling information for the first signal includes a second time unit offset and/or a first duration; the second time unit offset is configured to indicate a time unit offset of a time unit at which the first device starts transmitting the first signal relative to a time unit at which the fourth signal is located, and the first duration is configured to indicate a duration for which the first device transmits the first signal; or
the scheduling information for the first signal includes a second indicative information, and the second indicative information is configured to indicate one of multiple predefined time windows.

In some embodiments, the fourth signal is configured to schedule the first device to transmit the first signal at a first time unit set.

In some embodiments, the fourth signal includes a third indicative information, and the third indicative information is configured to indicate one of the multiple predefined time unit sets.

In some embodiments, the fourth signal includes a sixth indicative information, and the sixth indicative information is configured to indicate a transmit power of the first signal.

In some embodiments, the scheduling signal includes a fifth signal, and the communication unit 510 is further configured to:
transmit the fifth signal to the first device; where the fifth signal is configured to schedule or trigger the first device to transmit a second signal, the second signal being configured to energizing the terminal device.

In some embodiments, the fifth signal is configured to schedule the first device to transmit the second signal within a second time window.

In some embodiments, the fifth signal includes a scheduling information for the second signal, the second time window being determined based on the scheduling information for the second signal.

In some embodiments, the scheduling information for the second signal includes a third time unit offset and/or a second duration; the third time unit offset is configured to indicate a time unit offset of a time unit at which the first device starts transmitting the second signal relative to a time unit at which the fifth signal is located, and the second duration is configured to indicate a duration for which the first device transmits the second signal; or
the scheduling information for the second signal includes a fourth indicative information, and the fourth indicative information is configured to indicate the second time window of multiple predefined time windows.

In some embodiments, the fifth signal is configured to schedule the first device to transmit the second signal at a second time unit set.

In some embodiments, the second time unit set is determined based on predefined information and/or indicative information of the network device.

In some embodiments, the indicative information of the network device includes a fifth indicative information, and the fifth indicative information is configured to indicate one of multiple predefined time unit sets.

In some embodiments, the fifth signal includes a seventh indicative information, and the seventh indicative information is configured to indicate a transmit power of the second signal.

In some embodiments, the communication unit 510 is further configured to:
transmit a second signal on a downlink resource, the second signal being configured to energize the terminal device.

In some embodiments, the communication unit 510 is further configured to:
transmit a third signal to the terminal device, the third signal being configured to schedule or trigger the terminal device to transmit a backscattering signal to the terminal device.

In some embodiments, the third signal includes a first indicative information; where the first indicative information is configured to indicate a first time unit offset, the first time unit offset being configured to indicate a time unit offset of a time unit at which the terminal device transmits the backscattering signal relative to a time unit at which the third signal is located.

In some embodiments, the communication unit 510 is further configured to:
transmit a power switching instruction signal to the first device; where the power switching instruction signal is configured to instruct the first device to switch a transmit power of a signal from a second transmit power to a first transmit power; the first transmit power is a transmit power of the first device for transmitting the first signal on an uplink resource, and the second transmit power is the transmit power of the first device for transmitting the second signal on a downlink resource transmit power; the first signal is configured to energize the terminal device and/or for the terminal device to perform the backscattering communication, and the second signal is configured to energize the terminal device.

In some embodiments, the communication unit 510 may be a communication interface or transceiver, or an input/output interface of a communication chip or a system on chip. The processing unit described above may be one or more processors.

It should be understood that the network device 500 according to the embodiments of the present disclosure may correspond to the network device in the method embodiments of the present disclosure, and that the above and other operations and/or functions of the various units in the network device 500 are not repeated herein for brevity in order to realize the corresponding processes of the network device in the method shown in FIGS. 6 to 21, respectively.

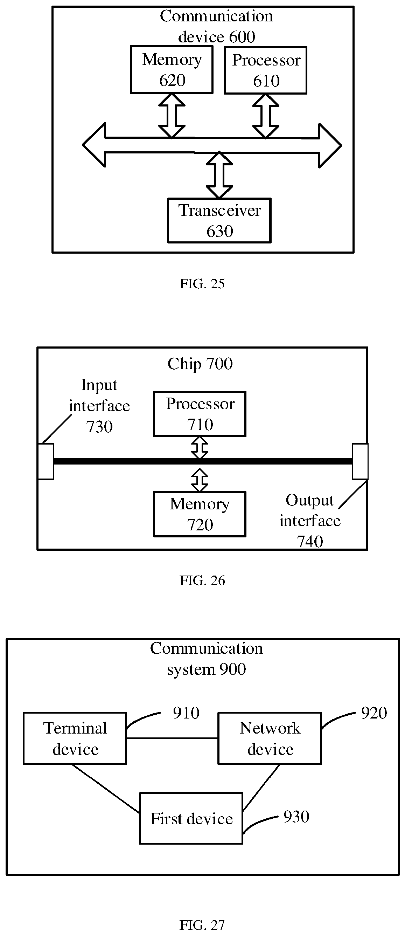

FIG. 25 is a structural schematic view of a communication device 600 according to some embodiments of the present disclosure. The communication device 600 shown in FIG. 14 includes a processor 610, which may call and run a computer program from a memory to implement the method in the embodiments of the present disclosure.

In some embodiments, as shown in FIG. 25, the communication device 600 may further include the memory 620; the processor 610 may call and run the computer program from the memory 620 to implement the method in embodiments of the present disclosure.

The memory 620 may be a separate device from the processor 610 or may be integrated into the processor 610.

In some embodiments, as shown in FIG. 25, the communication device 600 may further include a transceiver 630, which may be controlled by the processor 610 to communicate with other devices, specifically, to transmit information or data to other devices or to receive information or data transmitted by other devices.

The transceiver 630 may include a transmitter and a receiver. The transceiver 630 may further include an antenna, and the number of antennas may be one or more.

In some embodiments, the communication device 600 may specifically be the network device of the embodiments of the present disclosure, and the communication device 600 may realize the corresponding processes realized by the network device in the various methods of the embodiments of the present disclosure, which will not be repeated herein for brevity.

In some embodiments, the communication device 600 may specifically be the first device of the embodiments of the present disclosure, and the communication device 600 may realize the corresponding processes realized by the first device in the various methods of the present disclosure embodiments, which will not be repeated herein for brevity.

In some embodiments, the communication device 600 may specifically be the terminal device of the embodiments of the present disclosure, and the communication device 600 may realize the corresponding processes realized by the terminal device in the various methods of the embodiments of the present disclosure, which will not be repeated herein for brevity.

FIG. 26 is a structural schematic view of a chip according to some embodiments of the present disclosure. The chip 700 shown in FIG. 26 includes a processor 710, and the processor 710 may call and run a computer program from a memory to implement the method in the embodiments of the present disclosure.

In some embodiments, as shown in FIG. 26, the chip 700 may further include the memory 720. The processor 710 may call and run the computer program from the memory 720 to implement the method in the embodiments of the present disclosure.

The memory 720 may be a separate device from the processor 710 or may be integrated into the processor 710.

In some embodiments, the chip 700 may further include an input interface 730. The processor 710 may control the input interface 730 to communicate with other devices or chips, specifically, to obtain information or data transmitted by other devices or chips.

In some embodiments, the chip 700 may further include an output interface 740. The processor 710 may control the output interface 740 to communicate with other devices or chips, specifically, to output information or data to other devices or chips.

In some embodiments, the chip may be applied to the network device in the embodiments of the present disclosure, and the chip may realize the corresponding processes realized by the network device in the various methods of the embodiments of the present disclosure, which will not be repeated herein for brevity.

In some embodiments, the chip may be applied to the terminal device in the embodiments of the present disclosure, and the chip may realize the corresponding processes realized by the terminal device in the various methods of the embodiments of the present disclosure, which will not repeated herein for the brevity.

In some embodiments, the chip may be applied to the first device in the embodiments of the present disclosure, and the chip may realize the corresponding processes realized by the first device in the various methods of the embodiments of the present disclosure, which will not be repeated herein for brevity.

It should be understood that the chip referred to in the embodiments of the present disclosure may also be referred to as a system-level-chip, a system chip, a chip system, or a system-on-chip, etc.

FIG. 27 is a schematic block view of a communication system 900 according to some embodiments of the present disclosure. As shown in FIG. 27, the communication system 900 includes a terminal device 910, a network device 920, and a first device 930.

The terminal device 910 may be applied to implement the corresponding function realized by the terminal device in the above method, and the network device 920 may be applied to implement the corresponding function realized by the network device in the above method, and the first device 930 may be applied to implement the function realized by the first device in the above method, which is not further described herein for the sake of brevity.

It should be understood that the processor of the embodiments of the present disclosure may be an integrated circuit chip with signal processing capability. In realization, the steps of the above method embodiment may be accomplished by integrated logic circuits of hardware in the processor or by instructions in the form of software. The processor may be a general-purpose processor, a digital signal processor (DSP), an application specific integrated circuit (ASIC), a field programmable gate array (FPGA), or other programmable logic device, discrete gate or transistor logic device, and discrete hardware components. Various methods, steps, and logic block diagrams in embodiments of the present disclosure may be implemented or performed. The general-purpose processor may be a microprocessor or the processor may be any conventional processor, etc. The steps of the methods disclosed in conjunction with embodiments of the present disclosure may be directly embodied in a hardware decoding processor to perform the completion, or performed with a combination of hardware and software modules in the decoding processor. The software module may be located in a random memory, flash memory, read-only memory, programmable read-only memory or electrically erasable programmable memory, register, and other storage media well established in the art. The storage medium is located in a memory, and the processor reads the information in the memory and completes the steps of the method described above in conjunction with its hardware.

It will be appreciated that the memory in the embodiments of the present disclosure may be a volatile memory or a non-volatile memory, or may include both volatile and non-volatile memories. The non-volatile memory may be read-only memory (ROM), programmable read-only memory (PROM), erasable programmable read-only memory (EPROM), electrically erasable programmable read-only memory (EEPROM), or flash memory. The volatile memory may be random access memory (RAM), which is used as an external cache. By way of illustration, but not limitation, many forms of RAM are available, such as static RAM (SRAM), dynamic RAM (DRAM), synchronous DRAM (SDRAM), double data rate SDRAM (DDR SDRAM), enhanced synchronous SDRAM (ESDRAM), synchronous link DRAM (SLDRAM), and direct Rambus RAM (DRAM). It should be noted that the memory of the systems and methods described herein is intended to include, but is not limited to, these and any other suitable types of memory.

It should be understood that the above memories are exemplary but not limiting descriptions. For example, the memories in the embodiments of the present disclosure may be static RAM (SRAM), dynamic RAM (DRAM), synchronous DRAM (SDRAM), double data rate SDRAM (DDR SDRAM), enhanced SDRAM (ESDRAM), synch link DRAM (SLDRAM), and direct Rambus RAM (DR RAM), etc. That is, the memory in the embodiments of the present disclosure is intended to include, but is not limited to, these and any other suitable types of memory.

The embodiments of the present disclosure further provide a computer-readable storage medium for storing a computer program.

In some embodiments, the computer-readable storage medium may be applied to the network device in the embodiments of the present disclosure, and the computer program causes the computer to perform the corresponding processes implemented by the network device in the various methods of the embodiments of the present disclosure, which are not described herein for brevity.

In some embodiments, the computer-readable storage medium may be applied to the mobile terminal/terminal device in the embodiments of the present disclosure, and the computer program causes the computer to perform the corresponding processes realized by the mobile terminal/terminal device in the various methods of the embodiments of the present disclosure, which are not repeated herein for brevity.

In some embodiments, the computer-readable storage medium may be applied to the first device in the embodiments of the present disclosure, and the computer program causes the computer to perform the corresponding processes realized by the first device in the various methods of the embodiments of the present disclosure, which are not repeated herein for brevity.

The embodiments of the present disclosure further provide a computer program product including computer program instructions.

In some embodiments, the computer program product may be applied to the network device in the embodiments of the present disclosure, and the computer program instructions cause the computer to perform the corresponding processes realized by the network device in the various methods of the embodiments of the present disclosure, which are not repeated herein for brevity.

In some embodiments, the computer program product may be applied to the mobile terminal/terminal device in the embodiments of the present disclosure, and the computer program instructions cause the computer to execute the corresponding processes realized by the mobile terminal/terminal device in the various methods of the embodiments of the present disclosure, which are not repeated herein for brevity.

In some embodiments, the computer program product may be applied to the first device in the embodiments of the present disclosure, and the computer program instructions cause the computer to execute the corresponding processes realized by the first device in the various methods of the embodiments of the present disclosure, which are not repeated herein for brevity.

The embodiments of the present disclosure further provide a computer program.

In some embodiments, the computer program may be applied to the network device in the embodiments of the present disclosure, and when the computer program is run on a computer, the computer is caused to execute the corresponding processes realized by the network device in the respective methods of the embodiments of the present disclosure, which will not be repeated herein for brevity.

In some embodiments, the computer program may be applied to the mobile terminal/terminal device in the embodiments of the present disclosure, and when the computer program is run on a computer, the computer is caused to execute the corresponding processes realized by the mobile terminal/terminal device in the respective methods of the embodiments of the present disclosure, which are not repeated herein for brevity.

In some embodiments, the computer program may be applied to the first device in the embodiments of the present disclosure, and when the computer program is run on a computer, the computer is caused to execute the corresponding processes realized by the first device in the respective methods of the embodiments of the present disclosure, which will not be repeated herein for brevity.

Those skilled in the art may realize that the units and algorithmic steps of the various examples described in conjunction with the embodiments disclosed herein are capable of being implemented in electronic hardware, or a combination of computer software and electronic hardware. Whether these functions are performed in hardware or software depends on the particular application and design constraints of the technical solution. Those skilled in the art may use different methods to implement the described functions for each particular application, but such implementations should not be considered outside the scope of the present disclosure.

It is clear to those skilled in the art that, for the convenience and brevity of the description, the specific working processes of the above systems, devices, and units can be referred to the corresponding processes in the foregoing embodiments of the methods, which will not be repeated herein.

In the several embodiments provided in the present disclosure, it should be understood that the systems, devices and methods disclosed, may be realized in other ways. For example, the above device embodiments are merely schematic; e.g., the division of the units, as described, is merely a logical functional division, and the actual implementation may be divided in other ways; e.g., multiple units or components may be combined or may be integrated into another system, or some features may be ignored, or not implemented. At another point, the coupling or direct coupling or communication connection between each other shown or discussed may be an indirect coupling or communication connection through some interface, device or unit, which may be electrical, mechanical or otherwise.

The units illustrated as separated components may or may not be physically separated, and the components shown as units may or may not be physical units, i.e., they may be located in one place or they may also be distributed over multiple network units. Some or all of these units may be selected to fulfill the purpose of the embodiment schemes according to actual needs.

In addition, the functional units in the various embodiments of the present disclosure may be integrated in a single processing unit, or each unit may be physically present separately, or two or more units may be integrated in a single unit.

The functions described may be stored in a computer-readable storage medium when implemented as a software functional unit and sold or used as a separate product. Based on this understanding, the technical solution of the present disclosure may be embodied in the form of a software product, which is essentially or in part a contribution to the related art, or part of the technical solution may be embodied in the form of a software product. The computer software product is stored in a storage medium including a number of instructions to cause a computer device (which may be a personal computer, a server, or a network device, etc.) to perform all or part of the steps of the method described in various embodiments of the present disclosure. The storage medium includes a USB flash drive, a removable hard disk, a read-only memory (ROM), a random-access memory (RAM), a diskette or a CD-ROM, and other media that can store program code.

The foregoing is only some specific embodiments of the present disclosure, but the scope of the present disclosure is not limited thereto, and those skilled in the art can easily think of changes or substitutions within the scope of the technology disclosed in the present disclosure, which shall be covered by the scope of the present disclosure. Therefore, the scope of the present disclosure shall be stated to be subject to the scope of the claims.

## Claims

1. A wireless communication method, **characterized by** comprising:
receiving, by a terminal device, a signal transmitted by a first device; wherein the signal is configured to energize the terminal device and/or for the terminal device to perform a backscattering communication; the first device is a device other than a network device that provides services to the terminal device.

2. The method according to claim 1, wherein the receiving, by a terminal device, a signal transmitted by a first device comprises:
receiving, by the terminal device, a first signal transmitted by the first device on an uplink resource; wherein the first signal is configured to energize the terminal device and/or for the terminal device to perform the backscattering communication.

3. The method according to claim 2, wherein the first signal is configured for the terminal device to perform the backscattering communication, and the method further comprises:
modulating, by the terminal device, the first signal to obtain a backscattering signal; and
transmitting, by the terminal device, the backscattering signal to the network device.

4. The method according to claim 2, wherein the first signal is not configured for the terminal device to perform the backscattering communication, and the method further comprises:
modulating, by the terminal device, a first carrier signal transmitted by a second device to obtain a backscattering signal; and
transmitting, by the terminal device, the backscattering signal to the network device.

5. The method according to any one of claims 1-4, wherein the receiving, by a terminal device, a signal transmitted by a first device comprises:
receiving, by the terminal device, a second signal transmitted by the first device on a downlink resource; wherein the second signal is configured to energize the terminal device.

6. The method according to any one of claims 1-5, further comprising:
receiving, by the terminal device, a third signal transmitted by the network device; wherein the third signal is configured to schedule or trigger the terminal device to perform the backscattering communication.

7. The method according to claim 6, wherein the third signal comprises a first indicative information, the first indicative information being configured to indicate a first time unit offset; the first time unit offset is configured to indicate a time unit offset of a time unit at which the terminal device transmits a backscattering signal relative to a time unit at which the third signal is located.

8. The method according to claim 6, further comprising:
performing, by the terminal device, the backscattering communication on a next time unit of a time unit at which the third signal is located, in response to the third signal not indicating a time information at which the terminal device transmits a backscattering signal; or
performing, by the terminal device, the backscattering communication on a first uplink resource after a time unit at which the third signal is located, in response to the third signal not indicating a time information at which the terminal device transmits a backscattering signal.

9. The method according to any one of claims 1-8, wherein the terminal device is a zero-power device, the first device is a dedicated power supply node, and the first device is a non-zero-power device.

10. A wireless communication method, **characterized by** comprising:
transmitting, by a first device, a signal to a terminal device; wherein the signal is configured to energize the terminal device and/or for the terminal device to perform a backscattering communication; the first device is a device other than a network device that provides services to the terminal device.

11. The method according to claim 10, wherein the transmitting, by a first device, a signal to a terminal device comprises:
transmitting, by the first device, a first signal to the terminal device on an uplink resource; wherein the first signal is configured to energize the terminal device and/or for the terminal device to perform the backscattering communication.

12. The method according to claim 11, further comprising:
receiving, by the first device, a fourth signal transmitted by the network device; wherein the fourth signal is configured to schedule or trigger the first device to transmit the first signal, the first signal being transmitted by the first device based on the fourth signal.

13. The method according to claim 12, wherein the fourth signal is configured to schedule the first device to transmit the first signal from a first time unit for uplink data transmission; or
the fourth signal is configured to schedule the first device to start transmitting the first signal before the first time unit for uplink data transmission; or
the fourth signal is configured to schedule the first device to start transmitting the first signal after the first time unit for uplink data transmission.

14. The method according to any one of claims 11-13, wherein the first device is configured to transmit the first signal within a first time window.

15. The method according to claim 14, wherein the first time window is determined according to predefined information and/or indicative information of the network device.

16. The method according to claim 14 or 15, wherein the first time window is determined according to a scheduling information for the first signal in a fourth signal transmitted by the network device, and the fourth signal is configured to schedule or trigger the first device to transmit the first signal.

17. The method according to claim 16, wherein the scheduling information for the first signal comprises a second time unit offset and/or a first duration; the second time unit offset is configured to indicate a time unit offset of a time unit at which the first device starts transmitting the first signal relative to a time unit at which the fourth signal is located, and the first duration is configured to indicate a duration for which the first device transmits the first signal.

18. The method according to claim 16, wherein the scheduling information for the first signal comprises a second indicative information, and the second indicative information is configured to indicate one of a plurality of predefined time windows.

19. The method according to any one of claims 11-13, wherein the first device is configured to transmit the first signal on a first time unit set.

20. The method according to claim 19, wherein the first time unit set is determined according to predefined information and/or indicative information of the network device.

21. The method according to claim 20, wherein the indicative information of the network device comprises a third indicative information, and the third indicative information is configured to indicate one of a plurality of predefined time unit sets.

22. The method according to any one of claims 11-21, wherein the first signal is transmitted by the first device at a first transmit power; the first transmit power is predefined, configured by the network device, or determined by the first device.

23. The method according to any one of claims 11-22, wherein the first device is configured to start or stop transmitting the first signal to the terminal device according to a control signal from the network device.

24. The method according to any one of claims 10-23, wherein the transmitting, by a first device, a signal to a terminal device comprises:
transmitting, by the first device, a second signal to the terminal device on a downlink resource; wherein the second signal is configured to energize the terminal device.

25. The method according to claim 24, further comprising:
receiving, by the first device, a fifth signal transmitted by the network device; wherein the fifth signal is configured to schedule or trigger the first device to transmit the second signal, the second signal being transmitted by the first device based on the fifth signal.

26. The method according to claim 24 or 25, wherein the first device is configured to transmit the second signal within a second time window.

27. The method according to claim 26, wherein the second time window is determined according to predefined information and/or indicative information of the network device.

28. The method according to claim 26 or 27, wherein the second time window is determined according to a scheduling information for the second signal in a fifth signal, the fifth signal being configured to schedule or trigger the first device to transmit the second signal.

29. The method according to claim 28, wherein the scheduling information for the second signal comprises a third time unit offset and/or a second duration; the third time unit offset is configured to indicate a time unit offset of a time unit at which the first device starts transmitting the second signal relative to a time unit at which the fifth signal is located, and the second duration is configured to indicate a duration for which the first device transmits the second signal.

30. The method according to claim 28, wherein the scheduling information for the second signal comprises a fourth indicative information, and the fourth indicative information is configured to indicate one of a plurality of predefined time windows.

31. The method according to claim 24 or 25, wherein the first device is configured to transmit the second signal on a second time unit set.

32. The method according to claim 31, wherein the second time unit set is determined according to predefined information and/or indicative information of the network device.

33. The method according to claim 32, wherein the indicative information of the network device comprises a fifth indicative information, and the fifth indicative information is configured to indicate one of a plurality of predefined time unit sets.

34. The method according to any one of claims 24-33, wherein the second signal is transmitted by the first device at a second transmit power; the second transmit power is predefined, configured by the network device, or determined by the first device.

35. The method according to claim 34, further comprising:
receiving, by the first device, a power switching instruction signal transmitted by the network device; and
switching, by the first device, a transmit power of the signal from the second transmit power to a first transmit power, according to the power switching instruction signal; wherein the first transmit power is a transmit power used by the first device for transmitting a first signal on an uplink resource, and the first signal is configured for energize the terminal device and/or for the terminal device to perform the backscattering communication.

36. The method according to claim 35, wherein the switching, by the first device, a transmit power of the signal from a second transmit power to a first transmit power, according to the power switching instruction signal comprises:
immediately switching, by the first device, to the first transmit power, in response to receiving the power switching instruction signal; or
switching, by the first device, to the first transmit power on a next time unit, in response to receiving the power switching instruction signal; or
switching, by the first device, to the first transmit power on a first uplink time unit after a time unit at which the power switching instruction signal is received, in response to receiving the power switching instruction signal.

37. The method according to any one of claims 24-36, wherein the first device is configured to start or stop transmitting the second signal to the terminal device according to a control signal from the network device.

38. A wireless communication method, comprising:
transmitting, by a network device, a scheduling signal to a first device; wherein the scheduling signal is configured to schedule or trigger the first device to transmit a signal to a terminal device, the signal being configured to energize the terminal device and/or for the terminal device to perform a backscattering communication.

39. The method according to claim 38, wherein the scheduling signal comprises a fourth signal, and the transmitting, by a network device, a scheduling signal to a first device comprises:
transmitting, by the network device, the fourth signal to the first device; wherein the fourth signal is configured to schedule or trigger the first device to transmit a first signal, the first signal being configured to energize the terminal device and/or for the terminal device to perform the backscattering communication.

40. The method according to claim 39, wherein the fourth signal is configured to schedule the first device to transmit the first signal from a first time unit for uplink data transmission; or
the fourth signal is configured to schedule the first device to start transmitting the first signal before the first time unit for uplink data transmission; or
the fourth signal is configured to schedule the first device to start transmitting the first signal after the first time unit for uplink data transmission.

41. The method according to claim 39 or 40, wherein the fourth signal is configured to schedule the first device to transmit the first signal within a first time window.

42. The method according to claim 41, wherein the fourth signal comprises a scheduling information for the first signal, and the first time window is determined according to the scheduling information for the first signal.

43. The method according to claim 42, wherein the scheduling information for the first signal comprises a second time unit offset and/or a first duration; the second time unit offset is configured to indicate a time unit offset of a time unit at which the first device starts transmitting the first signal relative to a time unit at which the fourth signal is located, and the first duration is configured to indicate a duration for which the first device transmits the first signal; or
the scheduling information for the first signal comprises a second indicative information, and the second indicative information is configured to indicate one of a plurality of predefined time windows.

44. The method according to claim 39 or 40, wherein the fourth signal is configured to schedule the first device to transmit the first signal at a first time unit set.

45. The method according to claim 44, wherein the fourth signal comprises a third indicative information, and the third indicative information is configured to indicate one of a plurality of predefined time unit sets.

46. The method according to any one of claims 39-45, wherein the fourth signal comprises a sixth indicative information, and the sixth indicative information is configured to indicate a transmit power of the first signal.

47. The method according to any one of claims 38-46, wherein the scheduling signal comprises a fifth signal, and the transmitting, by a network device, a scheduling signal to a first device comprises:
transmitting, by the network device, the fifth signal to the first device; wherein the fifth signal is configured to schedule or trigger the first device to transmit a second signal, the second signal being configured to energizing the terminal device.

48. The method according to claim 47, wherein the fifth signal is configured to schedule the first device to transmit the second signal within a second time window.

49. The method according to claim 48, wherein the fifth signal comprises a scheduling information for the second signal, and the second time window is determined according to the scheduling information for the second signal.

50. The method according to claim 49, wherein the scheduling information for the second signal comprises a third time unit offset and/or a second duration; the third time unit offset is configured to indicate a time unit offset of a time unit at which the first device starts transmitting the second signal relative to a time unit at which the fifth signal is located, and the second duration is configured to indicate a duration for which the first device transmits the second signal; or
the scheduling information for the second signal comprises a fourth indicative information, and the fourth indicative information is configured to indicate the second time window of a plurality of predefined time windows.

51. The method according to claim 47, wherein the fifth signal is configured to schedule the first device to transmit the second signal at a second time unit set.

52. The method according to claim 51, wherein the second time unit set is determined according to predefined information and/or indicative information of the network device.

53. The method according to claim 52, wherein the indicative information of the network device comprises a fifth indicative information, and the fifth indicative information is configured to indicate one of a plurality of predefined time unit sets.

54. The method according to any one of claims 47-53, wherein the fifth signal comprises a seventh indicative information, and the seventh indicative information is configured to indicate a transmit power of the second signal.

55. The method according to any one of claims 38-46, further comprising:
transmitting, by the network device, a second signal on a downlink resource, the second signal being configured to energize the terminal device.

56. The method according to any one of claims 38-55, further comprising:
transmitting, by the network device, a third signal to the terminal device, the third signal being configured to schedule or trigger the terminal device to transmit a backscattering signal to the terminal device.

57. The method according to claim 56, wherein the third signal comprises a first indicative information; the first indicative information is configured to indicate a first time unit offset, the first time unit offset being configured to indicate a time unit offset of a time unit at which the terminal device transmits the backscattering signal relative to a time unit at which the third signal is located.

58. The method according to any one of claims 38-57, further comprising:
transmitting, by the network device, a power switching instruction signal to the first device; wherein the power switching instruction signal is configured to instruct the first device to switch a transmit power of the signal from a second transmit power to a first transmit power; the first transmit power is a transmit power used by the first device for transmitting a first signal on an uplink resource, and the second transmit power is the transmit power used by the first device for transmitting a second signal on a downlink resource transmit power; the first signal is configured to energize the terminal device and/or for the terminal device to perform the backscattering communication, and the second signal is configured to energize the terminal device.

59. A terminal device, comprising:
a communication unit, configured to receive a signal transmitted by a first device; wherein the signal is configured to energize the terminal device and/or for the terminal device to perform a backscattering communication; the first device is a device other than a network device that provides services to the terminal device.

60. The terminal device according to claim 59, wherein the communication unit is further configured to:
receive a first signal transmitted by the first device on an uplink resource; wherein the first signal is configured to energize the terminal device and/or for the terminal device to perform the backscattering communication.

61. The terminal device according to claim 60, wherein the first signal is configured for the terminal device to perform the backscattering communication, and the terminal device further comprises:
a processing unit, configured to modulate the first signal to obtain a backscattering signal;
wherein the communication unit is further configured to transmit the backscattering signal to the network device.

62. The terminal device according to claim 60, wherein the first signal is not configured for the terminal device to perform the backscattering communication, and the terminal device further comprises:
a processing unit, configured to modulate a first carrier signal transmitted by a second device to obtain a backscattering signal; and
wherein the communication unit is further configured to transmit the backscattering signal to the network device.

63. The terminal device according to any one of claims 59-62, wherein the communication unit is further configured to:
receive a second signal transmitted by the first device on a downlink resource; wherein the second signal is configured to energize the terminal device.

64. The terminal device according to any one of claims 59-63, wherein the communication unit is further configured to:
receive a third signal transmitted by the network device; wherein the third signal is configured to schedule or trigger the terminal device to perform the backscattering communication.

65. The terminal device according to claim 64, wherein the third signal comprises a first indicative information, the first indicative information being configured to indicate a first time unit offset; the first time unit offset is configured to indicate a time unit offset of a time unit at which the terminal device transmits a backscattering signal relative to a time unit at which the third signal is located.

66. The terminal device according to claim 64, wherein the communication unit is further configured to:
perform the backscattering communication on a next time unit of a time unit at which the third signal is located, in response to the third signal not indicating a time information at which the terminal device transmits a backscattering signal; or
perform the backscattering communication on a first uplink resource after a time unit at which the third signal is located, in response to the third signal not indicating a time information at which the terminal device transmits a backscattering signal.

67. The terminal device according to any one of claims 59-66, wherein the terminal device is a zero-power device, the first device is a dedicated power supply node, and the first device is a non-zero-power device.

68. A wireless communication device, comprising:
a communication unit, configured to transmit a signal to a terminal device; wherein the signal is configured to energize the terminal device and/or for the terminal device to perform a backscattering communication; the device is other than a network device that provides services to the terminal device.

69. The device according to claim 68, wherein the communication unit is further configured to:
transmit a first signal to the terminal device on an uplink resource; wherein the first signal is configured to energize the terminal device and/or for the terminal device to perform the backscattering communication.

70. The device according to claim 69, wherein the communication unit is further configured to:
receive a fourth signal transmitted by the network device; wherein the fourth signal is configured to schedule or trigger the device to transmit the first signal, the first signal being transmitted by the device based on the fourth signal.

71. The device according to claim 70, wherein the fourth signal is configured to schedule the device to transmit the first signal from a first time unit for uplink data transmission; or
the fourth signal is configured to schedule the device to start transmitting the first signal before the first time unit for uplink data transmission; or
the fourth signal is configured to schedule the device to start transmitting the first signal after the first time unit for uplink data transmission.

72. The device according to any one of claims 69-71, wherein the communication unit is further configured to:
transmit the first signal within a first time window.

73. The device according to claim 72, wherein the first time window is determined according to predefined information and/or indicative information of the network device.

74. The device according to claim 72 or 73, wherein the first time window is determined according to a scheduling information for the first signal in a fourth signal transmitted by the network device, and the fourth signal is configured to schedule or trigger the device to transmit the first signal.

75. The device according to claim 74, wherein the scheduling information for the first signal comprises a second time unit offset and/or a first duration; the second time unit offset is configured to indicate a time unit offset of a time unit at which the device starts transmitting the first signal relative to a time unit at which the fourth signal is located, and the first duration is configured to indicate a duration for which the device transmits the first signal.

76. The device according to claim 74, wherein the scheduling information for the first signal comprises a second indicative information, and the second indicative information is configured to indicate one of a plurality of predefined time windows.

77. The device according to any one of claims 69-71, wherein the communication unit is further configured to:
transmit the first signal on a first time unit set.

78. The device according to claim 77, wherein the first time unit set is determined according to predefined information and/or indicative information of the network device.

79. The device according to claim 78, wherein the indicative information of the network device comprises a third indicative information, and the third indicative information is configured to indicate one of a plurality of predefined time unit sets.

80. The device according to any one of claims 69-79, wherein the first signal is transmitted by the device at a first transmit power; the first transmit power is predefined, configured by the network device, or determined by the device.

81. The device according to any one of claims 69-90, wherein the communication unit is further configured to:
start or stop transmitting the first signal to the terminal device according to a control signal from the network device.

82. The device according to any one of claims 68-81, wherein the communication unit is further configured to:
transmit a second signal to the terminal device on a downlink resource; wherein the second signal is configured to energize the terminal device.

83. The device according to claim 82, wherein the communication unit is further configured to:
receive a fifth signal transmitted by the network device; wherein the fifth signal is configured to schedule or trigger the device to transmit the second signal, the second signal being transmitted by the device based on the fifth signal.

84. The device according to claim 82 or 83, wherein the communication unit is further configured to:
transmit the second signal within a second time window.

85. The device according to claim 84, wherein the second time window is determined according to predefined information and/or indicative information of the network device.

86. The device according to claim 84 or 85, wherein the second time window is determined according to a scheduling information for the second signal in a fifth signal, the fifth signal being configured to schedule or trigger the device to transmit the second signal.

87. The device according to claim 86, wherein the scheduling information for the second signal comprises a third time unit offset and/or a second duration; the third time unit offset is configured to indicate a time unit offset of a time unit at which the device starts transmitting the second signal relative to a time unit at which the fifth signal is located, and the second duration is configured to indicate a duration for which the device transmits the second signal.

88. The device according to claim 86, wherein the scheduling information for the second signal comprises a fourth indicative information, and the fourth indicative information is configured to indicate one of a plurality of predefined time windows.

89. The device according to claim 82 or 83, wherein the communication unit is further configured to:
transmit the second signal on a second time unit set.

90. The device according to claim 89, wherein the second time unit set is determined according to predefined information and/or indicative information of the network device.

91. The device according to claim 90, wherein the indicative information of the network device comprises a fifth indicative information, and the fifth indicative information is configured to indicate one of a plurality of predefined time unit sets.

92. The device according to any one of claims 82-91, wherein the second signal is transmitted by the device at a second transmit power; the second transmit power is predefined, configured by the network device, or determined by the device.

93. The device according to claim 92, wherein the communication unit is further configured to:
receive a power switching instruction signal transmitted by the network device;
wherein the device further comprises:
a processing unit, configured to switch a transmit power of the signal from the second transmit power to a first transmit power, according to the power switching instruction signal; wherein the first transmit power is a transmit power used by the device for transmitting a first signal on an uplink resource, and the first signal is configured for energize the terminal device and/or for the terminal device to perform the backscattering communication.

94. The device according to claim 93, wherein the processing unit is further configured to:
immediately switch to the first transmit power, in response to receiving the power switching instruction signal; or
switch to the first transmit power on a next time unit, in response to receiving the power switching instruction signal; or
switch to the first transmit power on a first uplink time unit after a time unit at which the power switching instruction signal is received, in response to receiving the power switching instruction signal.

95. The device according to any one of claims 82-94, wherein the communication unit is further configured to:
start or stop transmitting the second signal to the terminal device according to a control signal from the network device.

96. A network device, comprising:
a communication unit, configured to transmit a scheduling signal to a first device; wherein the scheduling signal is configured to schedule or trigger the first device to transmit a signal to a terminal device, the signal being configured to energize the terminal device and/or for the terminal device to perform a backscattering communication.

97. The network device according to claim 96, wherein the scheduling signal comprises a fourth signal, and the communication unit is further configured to:
transmit the fourth signal to the first device; wherein the fourth signal is configured to schedule or trigger the first device to transmit a first signal, the first signal being configured to energize the terminal device and/or for the terminal device to perform the backscattering communication.

98. The network device according to claim 97, wherein the fourth signal is configured to schedule the first device to transmit the first signal from a first time unit for uplink data transmission; or
the fourth signal is configured to schedule the first device to start transmitting the first signal before the first time unit for uplink data transmission; or
the fourth signal is configured to schedule the first device to start transmitting the first signal after the first time unit for uplink data transmission.

99. The network device according to claim 97 or 98, wherein the fourth signal is configured to schedule the first device to transmit the first signal within a first time window.

100. The network device according to claim 99, wherein the fourth signal comprises a scheduling information for the first signal, and the first time window is determined according to the scheduling information for the first signal.

101. The network device according to claim 100, wherein the scheduling information for the first signal comprises a second time unit offset and/or a first duration; the second time unit offset is configured to indicate a time unit offset of a time unit at which the first device starts transmitting the first signal relative to a time unit at which the fourth signal is located, and the first duration is configured to indicate a duration for which the first device transmits the first signal; or
the scheduling information for the first signal comprises a second indicative information, and the second indicative information is configured to indicate one of a plurality of predefined time windows.

102. The network device according to claim 97 or 98, wherein the fourth signal is configured to schedule the first device to transmit the first signal at a first time unit set.

103. The network device according to claim 102, wherein the fourth signal comprises a third indicative information, and the third indicative information is configured to indicate one of a plurality of predefined time unit sets.

104. The network device according to any one of claims 97-103, wherein the fourth signal comprises a sixth indicative information, and the sixth indicative information is configured to indicate a transmit power of the first signal.

105. The network device according to any one of claims 96-104, wherein the scheduling signal comprises a fifth signal, and the communication unit is further configured to:
transmit the fifth signal to the first device; wherein the fifth signal is configured to schedule or trigger the first device to transmit a second signal, the second signal being configured to energizing the terminal device.

106. The network device according to claim 105, wherein the fifth signal is configured to schedule the first device to transmit the second signal within a second time window.

107. The network device according to claim 106, wherein the fifth signal comprises a scheduling information for the second signal, and the second time window is determined according to the scheduling information for the second signal.

108. The network device according to claim 107, wherein the scheduling information for the second signal comprises a third time unit offset and/or a second duration; the third time unit offset is configured to indicate a time unit offset of a time unit at which the first device starts transmitting the second signal relative to a time unit at which the fifth signal is located, and the second duration is configured to indicate a duration for which the first device transmits the second signal; or
the scheduling information for the second signal comprises a fourth indicative information, and the fourth indicative information is configured to indicate the second time window of a plurality of predefined time windows.

109. The network device according to claim 105, wherein the fifth signal is configured to schedule the first device to transmit the second signal at a second time unit set.

110. The network device according to claim 109, wherein the second time unit set is determined according to predefined information and/or indicative information of the network device.

111. The network device according to claim 110, wherein the indicative information of the network device comprises a fifth indicative information, and the fifth indicative information is configured to indicate one of a plurality of predefined time unit sets.

112. The network device according to any one of claims 105-111, wherein the fifth signal comprises a seventh indicative information, and the seventh indicative information is configured to indicate a transmit power of the second signal.

113. The network device according to any one of claims 96-104, wherein the communication unit is further configured to:
transmit a second signal on a downlink resource, the second signal being configured to energize the terminal device.

114. The network device according to any one of claims 96-113, wherein the communication unit is further configured to:
transmit a third signal to the terminal device, the third signal being configured to schedule or trigger the terminal device to transmit a backscattering signal to the terminal device.

115. The network device according to claim 114, wherein the third signal comprises a first indicative information; the first indicative information is configured to indicate a first time unit offset, the first time unit offset being configured to indicate a time unit offset of a time unit at which the terminal device transmits the backscattering signal relative to a time unit at which the third signal is located.

116. The network device according to any one of claims 96-115, wherein the communication unit is further configured to:
transmit a power switching instruction signal to the first device; wherein the power switching instruction signal is configured to instruct the first device to switch a transmit power of the signal from a second transmit power to a first transmit power; the first transmit power is a transmit power used by the first device for transmitting a first signal on an uplink resource, and the second transmit power is the transmit power used by the first device for transmitting a second signal on a downlink resource transmit power; the first signal is configured to energize the terminal device and/or for the terminal device to perform the backscattering communication, and the second signal is configured to energize the terminal device.

117. A terminal device, comprising a processor and a memory; wherein the memory is configured to store a computer program, and the processor is configured to call and run the computer program stored in the memory to perform the method according to any one of claims 1-9.

118. A chip, comprising: a processor configured to call and run a computer program from a memory, to cause a device arranged with the chip to perform the method according to any one of claims 1-9.

119. A computer-readable storage medium, configured to store a computer program; wherein the computer program is configured to cause a computer to perform the method according to any one of claims 1-9.

120. A computer program product, comprising computer program instructions; wherein the computer program instructions are configured to cause a computer to perform the method according to any one of claims 1-9.

121. A computer program, configured to cause a computer to perform the method according to any one of claims 1-9.

122. Awireless communication device, comprising a processor and a memory; wherein the memory is configured to store a computer program, and the processor is configured to call and run the computer program stored in the memory to perform the method according to any one of claims 10-37.

123. A chip, comprising: a processor configured to call and run a computer program from a memory, to cause a device arranged with the chip to perform the method according to any one of claims 10-37.

124. A computer-readable storage medium, configured to store a computer program; wherein the computer program is configured to cause a computer to perform the method according to any one of claims 10-37.

125. A computer program product, comprising computer program instructions; wherein the computer program instructions are configured to cause a computer to perform the method according to any one of claims 10-37.

126. A computer program, configured to cause a computer to perform the method according to any one of claims 10-37.

127. A network device, comprising a processor and a memory; wherein the memory is configured to store a computer program, and the processor is configured to call and run the computer program stored in the memory to perform the method according to any one of claims 38-58.

128. A chip, comprising: a processor configured to call and run a computer program from a memory, to cause a device arranged with the chip to perform the method according to any one of claims 38-58.

129. A computer-readable storage medium, configured to store a computer program; wherein the computer program is configured to cause a computer to perform the method according to any one of claims 38-58.

130. A computer program product, comprising computer program instructions; wherein the computer program instructions are configured to cause a computer to perform the method according to any one of claims 38-58.

131. A computer program, configured to cause a computer to perform the method according to any one of claims 38-58.
